# EUROPÄISCHE PATENTSCHRIFT

(11) **EP 1 871 848 B1**
(45) Veröffentlichungstag und Bekanntmachung des Hinweises auf die Patenterteilung: **16.09.2009**
(21) Anmeldenummer: 06743277.3
(22) Anmeldetag: 11.04.2006
(51) Int. Cl.: C09D 11/00

(54) **VERFAHREN ZUM AUFBRINGEN VON GELÖSTEN ODER DISPERGIERTEN SUBSTANZEN**
METHOD FOR APPLYING DISSOLVED OR DISPERSED SUBSTANCES
PROCEDE PERMETTANT D'APPLIQUER DES SUBSTANCES DISSOUTES OU DISPERSEES

(30) Priorität: 12.04.2005 DE 102005017052
(43) Veröffentlichungstag der Anmeldung: 02.01.2008
(73) Patentinhaber: BASF SE, 67056 Ludwigshafen (DE)
(72) Erfinder: BECKER, Heike, 68163 Mannheim (DE); DEGEN, Hans-Jürgen, 64653 Lorsch (DE); HERRERA TABOADA, Lidcay, B-8400 Oostende (BE); KLUGE, Michael, 67547 Worms (DE)
(86) Internationale Anmeldenummer: PCT/EP2006/061505
(87) Internationale Veröffentlichungsnummer: WO 2006/108832

(56) Entgegenhaltungen:
- EP-A- 0 736 582
- EP-A- 1 424 374
- WO-A-99/23183
- US-A- 5 648 405
- US-A- 5 998 543

## Beschreibung

Die vorliegende Erfindung betrifft ein Verfahren zum Aufbringen von gelösten oder dispergierten Substanzen (A) aus einer Formulierung in polarem Medium auf Substraten (B) unter Verwendung von mindestens einer Hilfssubstanz (C), indem man eine Formulierung in polarem Medium, die gelöste oder dispergierte Substanz (A) und mindestens eine Hilfssubstanz (C) enthält, auf Substrat (B) aufbringt,
wobei der pKₐ-Wert von Hilfssubstanz (C) höher ist als vom Substrat (B) und von gelöster oder dispergierter Substanz (A),
wobei man gelöste oder dispergierte Substanz (A) wählt aus wasserlöslichen Farbstoffen, selbstdispergierenden Farbmitteln, Kombinationen aus Dispersionsfarbstoff mit Dispergiermittel und Kombinationen aus Pigment mit Dispergiermittel
und wobei Hilfssubstanz (C) gewählt wird aus dreidimensionalen amphoteren Kern-Schale-Polymeren, bei denen es sich um partiell vernetztes chemisch modifiziertes Polymer mit kationischem Kern, der erhältlich ist durch (Co)polymerisation von einem oder mehreren Stickstoffhaltigen (Co)monomeren, und vor dem Aufbringen auf Substrat (B) ungeladener oder negativ geladener Hülle handelt.

In vielen Fällen ist man bestrebt, gelöste oder dispergierte Substanzen lokal und zeitlich gezielt auf Substrate aufzubringen. Beispiele sind das Drucken mit gelösten oder dispergierten Farbmitteln, insbesondere das Drucken nach dem Ink-Jet-Verfahren beispielsweise mit Farbstoffen, Dispersionsfarbstoffen oder Pigmenten, wo man in vielen Fällen an gestochen scharfen Bildern oder Schriftzügen interessiert ist.

Dabei ist es nicht nur erforderlich, entsprechende gelöste oder dispergierte Substanz gezielt aufzubringen, sondern auch ein unerwünschtes Verlaufen oder Vermischen oder Migrieren zu verhindern.

Bisherige Lösungsvorschläge sind in vielen Fällen nicht befriedigend.

So schlagen beispielsweise JP 2004/155686 und EP 0 997 506 A vor, zwei wässrige Formulierungen zu verdrucken, von denen eine ein Farbmittel und die andere ein pH-Wert-empfindliches Polymer enthält. Diese Lösung ist jedoch technisch aufwändig, sie erfordert in vielen Fällen spezielle Drucker. Es ist außerdem nicht gewährleistet, dass zwischen den beiden Druckschritten von erster und zweiter wässrigen Formulierung kein unerwünschtes Verlaufen stattfindet. Weiterhin zeigt sich, dass in vielen Fällen die beiden Formulierungen bereits auf dem Druckkopf miteinander reagieren und dort zu Ausfällungen führen, wodurch der Drucker geschädigt wird.

JP-A 2000-17209 schlägt vor, zum Bedrucken von beispielsweise Papier eine Kombination von zwei Tinten einzusetzen, von denen die eine mindestens ein kationisches oder amphoteres Polymer auf Basis von Polyethylenimin enthält und die andere ein anionisches Polymer, beispielsweise Polyacrylsäure. Diese Lösung ist ebenfalls technisch aufwändig, sie erfordert in vielen Fällen spezielle Drucker. Es ist außerdem nicht gewährleistet, dass zwischen den beiden Druckschritten von erster und zweiter Tinte kein unerwünschtes Verlaufen stattfindet. Weiterhin zeigt sich, dass in vielen Fällen die beiden Tinten bereits auf dem Druckkopf miteinander reagieren und dort zu Ausfällungen führen, wodurch der Drucker geschädigt wird.

EP 0 736 582 schlägt vor, als Dispergiermittel in Ink-Jet-Tinten ein amphoteres Polymer zuzusetzen, das durch radikalische Copolymerisation von Carboxylgruppenhaltigen oder Sulfonsäuregruppenhaltigen Monomeren wie beispielsweise Acrylsäure, Itaconsäure, Methacrylsäure, Maleinsäure, Fumarsäure und Styrolsulfonsäure mit kationischen Monomeren wie beispielsweise 2-Vinylpyrrolidon, 4-Vinylpyrrolidon, Allylamin, Diallylamin und N-Methylaminoethylmethacrylat erhältlich ist. Der Einsatz von derartigen amphoteren Polymeren führt in ink-Jet-Tinten in vielen Fällen zu einem unerwünscht starken Anstieg der Viskosität.

US 5,648,405 schlägt vor, als Dispergiermittel in Ink-Jet-Tinten Polyampholyten einzusetzen, die durch radikalische Copolymerisation von ethylenisch ungesättigten Carbonsäuren und basischen Monomeren wie beispielsweise N,N-Dimethylaminoethyl(meth)-acrylat erhältlich sind.

Es bestand also die Aufgabe, ein Verfahren zum Aufbringen von gelösten oder dispergierten Stoffen bereit zu stellen, das die aus dem Stand der Technik bekannten Nachteile vermeidet. Es bestand weiterhin die Aufgabe, wässrige Formulierungen bereit zu stellen, mit denen sich ein Verfahren ausüben lässt, das die aus dem Stand der Technik bekannten Nachteile vermeidet. Schließlich bestand die Aufgabe, Substrate bereit zu stellen, auf denen gelöste oder dispergierte Substanzen präzise aufgebracht sind.

Demgemäß wurde das eingangs definierte Verfahren zum Aufbringen von gelösten oder dispergierten Substanzen (A) aus einer Formulierung in polarem Medium auf Substraten (B) unter Verwendung von mindestens einer Hilfssubstanz (C) gefunden, indem man
eine Formulierung in polarem Medium, vorzugsweise eine wässrige Formulierung aufbringt, die gelöste oder dispergierte Substanz (A) und mindestens eine Hilfssubstanz (C) enthält, auf Substrat (B) aufbringt,
wobei der pKₐ-Wert von Hilfssubstanz (C) höher ist als vom Substrat (B) und von gelöster oder dispergierter Substanz (A)
und wobei Hilfssubstanz (C) gewählt wird aus dreidimensionalen amphoteren Kem-Schale-Polymeren.

Unter einer Formulierung in polarem Medium ist im Zusammenhang mit der vorliegenden Erfindung eine bei Zimmertemperatur im wesentlichen flüssige Formulierung zu verstehen, die dispergierte Feststoffe enthalten kann und die mindestens ein polares Medium umfasst, beispielsweise Alkohole wie Methanol, Ethanol oder Isopropanol und insbesondere Wasser. Bevorzugt sind Formulierungen in polarem Medium wässrige Formulierungen und enthalten mindestens 50 Gew.-% Wasser.

Insbesondere kontaktiert man Substrat (B) weder unmittelbar vor noch unmittelbar nach dem Aufbringen von Formulierung in polarem Medium und vorzugsweise wässriger Formulierung, die gelöste oder dispergierte Substanz (A) und mindestens eine Hilfssubstanz (C) enthält, mit einer Lösung von anionischem Polymer wie beispielsweise Poly(meth)acrylsäure oder Copolymere von Styrol und (Meth)acrylsäure. Dabei ist unter unmittelbar vor bzw. unmittelbar nach dem Aufbringen ein Zeitrahmen von einer halben Stunde vor bis eine halbe Stunde nach dem Aufbringen von Formulierung in polarem Medium und vorzugsweise von wässriger Formulierung, die gelöste oder dispergierte Substanz (A) und mindestens eine Hilfssubstanz (C) enthält, zu betrachten.

Als Substrate (B) sind starre und vorzugsweise flexible Substrate geeignet, wobei unter flexiblen Substraten im Wesentlichen solche Substrate zu verstehen sind, die man biegen kann, ohne dass sie brechen oder sich irreversibel verändern.

Beispiele für Substrate (B) sind:
cellulosehaltige Materialien wie Papier, Pappe, Karton, Holz und Holzwerkstoffe, die auch lackiert oder anderweitig beschichtet sein können,
metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
silikatische Materialien wie Glas, Porzellan und Keramik, die beschichtet sein können,
polymere Materialien wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
Leder, sowohl Naturleder als auch Kunstleder, als Glatt-, Nappa- oder Velourleder,
Lebensmittel und Kosmetika, und insbesondere
textile Substrate wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Mischgewebe wie beispielsweise Polyester/Polyurethan-Mischgewebe (z. B. Lycra®), Polyethylen-Polypropylen-Mischgewebe, Polyestermikrofasern und Glasfasergewebe, und insbesondere

Papier, Pappe, Kartonagen, bevorzugt Papier mit einem pKₐ-Wert im Bereich von 4 bis 6, ganz besonders bevorzugt Transferpapier mit einem pKₐ-Wert von 4,5 bis 5,5.

Beispiele für flexible Substrate sind insbesondere Leder, textile Substrate, Papier, Pappe, Kartonagen, bevorzugt Papier mit einem pKₐ-Wert im Bereich von 4 bis 6, ganz besonders bevorzugt Transferpapier mit einem pKₐ-Wert von 4,5 bis 5,5.

Unter Aufbringen wird im Folgenden verstanden, dass man eine Formulierung in polarem Medium, bevorzugt eine wässrige Formulierung, die mindestens eine gelöste oder dispergierte Substanz (A) und mindestens eine Hilfssubstanz (C) enthält, gezielt mit Substrat (B) kontaktiert, wobei im Anschluss an das Kontaktieren gelöste bzw. dispergierte Substanz (A) an Substrat (B) haftet. Aufbringen im Sinne der vorliegenden Erfindung kann irreversibel oder reversibel sein, wobei ein mögliches Trennen von gelöster oder dispergierter Substanz (A) und Substrat (B) geänderte äußere Bedingungen erfordert, beispielsweise mechanische Gewalt, drastische Änderung des pH-Werts oder drastische Temperaturänderung.

Unter Aufbringen einer Formulierung wird im Folgenden ferner verstanden, dass man an einer Stelle von Substrat (B) nur eine Formulierung in polarem Medium, bevorzugt eine wässrige Formulierung, aufbringt. An einer anderen Stelle von Substrat (B) kann man die gleiche oder eine andere Formulierung in polarem Medium, bevorzugt eine wässrige Formulierung, aufbringen. Derartige Stellen können im Bereich von einem oder mehreren Quadratmetern groß sein, sie können jedoch auch im Bereich von 1 mm² bis 10 mm² oder punktförmig sein, das heißt im Bereich von einem oder wenigen µm² groß sein.

In einer Ausführungsform der vorliegenden Erfindung bringt man im Bereich von 0,01 bis 200 g gelöste bzw. dispergierte Substanz (A) pro m² Substrat (B) auf, bevorzugt 0,03 bis 150 g, besonders bevorzugt 0,05 bis 120 g, ganz besonders bevorzugt 0,1 bis 50 g pro m² Substrat (B).

In einer Ausführungsform der vorliegenden Erfindung führt man das Aufbringen so aus, dass man eine Formulierung in polarem Medium und vorzugsweise eine wässrige Formulierung, die mindestens eine gelöste oder dispergierte Substanz (A) und mindestens eine Hilfssubstanz (C) enthält, auf Substrat (B) sprüht, walzt, pinselt, mit einer Pipette wie beispielsweise einer Eppendorf-Mikropipette aufbringt und bevorzugt verdruckt, besonders bevorzugt nach dem Ink-Jet-Verfahren.

In einer Ausführungsform der vorliegenden Erfindung verdruckt man eine Formulierung in polarem Medium und vorzugsweise eine wässrige Formulierung, die mindestens eine gelöste oder dispergierte Substanz (A) und mindestens eine Hilfssubstanz (C) enthält, in einem Druckschritt nach dem Ink-Jet-Verfahren auf Substrat (B).

In einer Ausführungsform der vorliegenden Erfindung handelt es sich bei der polaren und vorzugsweise wässrigen Formulierung, die mindestens eine gelöste oder dispergierte Substanz (A) und mindestens eine Hilfssubstanz (C) enthält, um eine Behandlungsflüssigkeit, bevorzugt um eine Tinte und besonders bevorzugt um eine Ink-Jet-Tinte.

Bei gelöster oder dispergierter Substanz (A) handelt es sich vorzugsweise um solche Stoffe oder Stoffgemische, die als solche bei Zimmertemperatur fest sind.

In einer Ausführungsform der vorliegenden Erfindung umfasst gelöste oder dispergierte Substanz (A) mindestens eine anionische Substanz. Darunter ist zu verstehen, dass gelöste oder dispergierte Substanz (A) mindestens ein organisches Anion umfasst, dessen Molekulargewicht größer ist als die des zur elektrostatischen Neutralisierung erforderlichen Kations. Vorzugsweise sind zur elektrostatischen Neutralisierung erforderliche Kationen gewählt aus Alkalimetallen wie beispielsweise Natrium und Kalium oder aus Ammonium, das im Rahmen der vorliegenden Erfindung NH₄⁺ sein kann oder ein bis vierfach gleich oder verschieden mit beispielsweise C₁-C₄-Alkyl wie Methyl, Ethyl, n-Propyl, n-Butyl und iso-Propyl und/oder C₂-C₄-ω-Hydroxyalkyl, insbesondere 2-Hydroxyethyl ein- bis 4-fach substituiert sein kann. Vorzugsweise ist das Molekulargewicht von organischem Anion aus gelöster oder dispergierter Substanz (A) im Bereich von 5 bis 10.000 mal so hoch wie das des zur elektrostatischen Neutralisierung erforderlichen Kations, bevorzugt im Bereich von 100 bis 10.000 mal so hoch.

In einer Ausführungsform der vorliegenden Erfindung umfasst gelöste oder dispergierte Substanz (A) eine Substanz mit mindestens einer SO₃⁻- oder OSO₃⁻ -Gruppe pro Molekül, beispielsweise eine organische und vorzugsweise aromatische Sulfonsäure oder Disulfonsäure bzw. ihr korrespondierendes Alkalimetall- oder Ammoniumsalz oder eine sulfatierte organische Verbindung.

In einer anderen Ausführungsform der vorliegenden Erfindung umfasst gelöste oder dispergierte Substanz (A) eine Substanz mit COOH-Gruppen bzw. ihr korrespondierendes Alkalimetall- oder Ammoniumsalz.

In einer Ausführungsform der vorliegenden Erfindung handelt es sich bei gelöster oder dispergierter Substanz (A) um ein Farbmittel oder eine Kombination aus Farbmittel und Dispergiermittel. Beispielhaft sind zu nennen: wasserlösliche Farbstoffe, selbstdispergierende Farbmittel wie beispielsweise mit einer oder mehreren Sulfonsäuregruppen oder Sulfonsäureamidgruppen pro Partikel modifizierte Pigmente, Kombinationen aus Dispersionsfarbstoff mit Dispergiermittel und Kombinationen aus Pigment mit Dispergiermittel.

Beispiele für lösliche Farbstoffe sind
C.I. Basic Yellow 2, 37, 78, 94, 96, 97, 98, 102 und 111;
C.I. Basic Orange 2, 60, 62 und 63;
C.I. Basic Red 1, 14, 49, 108 und 111;
C.I. Basic Violet 1, 3, 4, 10, 11, 49 und 50;
C.I. Basic Blue 26, 152, 157, 158 und 161;
C.I. Basic Green 1 und 4;
C.I. Basic Brown 1;
C.I. Acid Orange 7 und 8;
C.I. Acid Blue 9;
C.I. Direct Yellow 4, 5, 11, 15, 127, 131 und 147;
C.I. Direct Red 239 und 254;
C.I. Direct Blue 161, 199, 279 und 281;
C.I. Reactive Red 120.

Weitere geeignete lösliche Farbstoffe sind solche der Formel 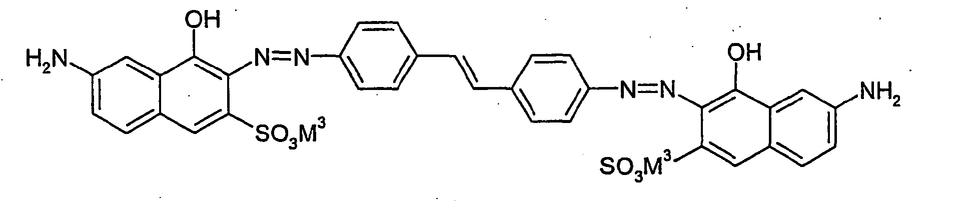 wobei M³ gleich oder verschieden sein können und gewählt aus Alkalimetallen wie beispielsweise Lithium und insbesondere Natrium oder Kalium und weiterhin aus Ammonium, unsubstituiert oder substituiert, beispielsweise C₁-C₄-Alkyl oder ω-Hydroxy-C₂-C₄-Alkyl, insbesondere 2-Hydroxyethyl.

Beispiele für Pigmente sind organische und anorganische Pigmente, wobei Küpenfarbstoffe im Rahmen der vorliegenden Erfindung mit unter Pigmenten aufgeführt sind.

### Organische Pigmente:

- Monoazopigmente: wie beispielsweise C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: wie beispielsweise C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188,
- Anthanthronpigmente: wie beispielsweise C.I. Pigment Red 168 (C.I. Vat Orange 3);
- Anthrachinonpigmente: wie beispielsweise C.I. Pigment Yellow 147 und 177, C.I. Pigment Violet 31,
- Anthrapyrimidinpigmente: wie beispielsweise C.I. Pigment Yellow 108 (C.I. Vat Yellow 20);
- Chinacridonpigmente: wie beispielsweise C.I. Pigment Red 122, 202 und 206, C.I. Pigment Violet 19;
- Chinophthalonpigmente: wie beispielsweise C.I. Pigment Yellow 138,
- Dioxazinpigmente: wie beispielsweise C.I. Pigment Violet 23 und 37,
- Flavanthronpigmente: wie beispielsweise C.I. Pigment Yellow 24 (C.I. Vat Yellow 1),
- Indanthronpigmente: wie beispielsweise C.I. Pigment Blue 60 (C.I. Vat Blue 4) und 64 (C.I. Vat Blue 6),
- lsoindolinpigmente: wie beispielsweise C.I. Pigment Orange 69, C.I. Pigment Red 260, C.I. Pigment Yellow 139 und 185,
- Isoindolinonpigmente: wie beispielsweise C.I. Pigment Orange 61, C.I. Pigment Red 257 und 260, C.I. Pigment Yellow 109, 110, 173 und 185,
- Isoviolanthronpigmente: wie beispielsweise C.I. Pigment Violet 31 (C.I. Vat Violet 1),
- Metallkomplexpigmente: wie beispielsweise C.I. Pigment Yellow 117, 150 und 153, C.I. Pigment Green 8,
- Perinonpigmente: wie beispielsweise C.I. Pigment Orange 43 (C.I. Vat Orange 7), C.I. Pigment Red 194 (C.I. Vat Red 15),
- Perylenpigmente: wie beispielsweise C.I. Pigment Black 31 und 32, C.I. Pigment Red 123, 149, 178, 179 (C.I. Vat Red 23), 190 (C.I. Vat Red 29) und 224, C.I. Pigment Violet 29,
- Phthalocyaninpigmente: wie beispielsweise C.I. Pigment Blue 15, 15:1, 15:2, 15:3, 15:4, 15:6 und 16, C.I. Pigment Green 7 und 36,
- Pyranthronpigmente: wie beispielsweise C.I. Pigment Orange 51, C.I. Pigment Red 216 (C.I. Vat Orange 4),
- Thioindigopigmente: wie beispielsweise C.I. Pigment Red 88 und 181 (C.I. Vat Red 1), C.I. Pigment Violet 38 (C.I. Vat Violet 3),
- Triarylcarboniumpigmente: wie beispielsweise C.I. Pigment Blue 1, 61 und 62, C.I. Pigment Green 1, C.I. Pigment Red 81, 81:1 und 169, C.I. Pigment Violet 1, 2, 3 und 27, C.I. Pigment Black 1 (Anilinschwarz),
C.I. Pigment Yellow 101 (Aldazingelb);
C.I. Pigment Brown 22.

### Beispiele für Küpenfarbstoffe (außer den bereits oben genannten):

- C.I. Vat Yellow: 2, 3, 4, 5, 9, 10, 12, 22, 26, 33, 37, 46, 48, 49 und 50;
- C.I. Vat Orange: 1, 2, 5, 9, 11, 13, 15, 19, 26, 29, 30 und 31;
- C.I. Vat Red: 2, 10, 12, 13, 14, 16, 19, 21, 31, 32, 37, 41, 51, 52 und 61;
- C.I. Vat Violet: 2, 9, 13, 14, 15, 17 und 21;
- C.I. Vat Blue 1 (C.I. Pigment Blue 66),: 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green: 1, 2, 3, 5, 7, 8, 9, 13, 14, 17, 26, 29, 30, 31, 32, 33, 40, 42, 43, 44 und 49;
- C.I. Vat Brown: 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black: 1, 2, 7, 8, 9, 13, 14, 16, 19, 20, 22, 25, 27, 28, 29, 30, 31, 32, 34, 36, 56, 57, 58, 63, 64 und 65;
anorganische Pigmente:
Weißpigmente wie beispielsweise Titandioxid (C.I. Pigment White 6), Zinkweiß, Farbenzinkoxid; Zinksulfid, Lithopone; Bleiweiß, Bariumsulfat,
Schwarzpigmente wie beispielsweise Eisenoxidschwarz (C.I. Pigment Black 11), Eisen-Mangan-Schwarz, Spinellschwarz (C.I. Pigment Black 27); Ruß (C.I. Pigment Black 7),
Buntpigmente wie beispielsweise Chromoxid, Chromoxidhydratgrün, Chromgrün (C.I. Pigment Green 48), Cobaltgrün (C.I. Pigment Green 50), Ultramaringrün, Kobaltblau (C.I. Pigment Blue 28 und 36); Ultramarinblau; Eisenblau (C.I. Pigment Blue 27); Manganblau; Ultramarinviolett, Kobalt- und Manganviolett, Eisenoxidrot (C.I. Pigment Red 101), Cadmiumsulfoselenid (C.I. Pigment Red 108); Molybdatrot (C.I. Pigment Red 104), Ultramarinrot,
Eisenoxidbraun, Mischbraun, Spinell- und Korundphasen (C.I. Pigment Brown 24, 29 und 31), Chromorange,
Eisenoxidgelb (C.I. Pigment Yellow 42), Nickeltitangelb (C.I. Pigment Yellow 53, C.I. Pigment Yellow 157 und 164), Chromtitangelb, Cadmiumsulfid und Cadmiumzinksulfid (C.I. Pigment Yellow 37 und 35), Chromgelb (C.I. Pigment Yellow 34), Zinkgelb, Erdalkalichromate; Neapelgelb, Bismutvanadat (C.I. Pigment Yellow 184),

Interferenzpigmente wie beispielsweise Metalleffektpigmente auf der Basis beschichteter Metallplättchen, Perlglanzpigmente auf der Basis metalloxidbeschichteter Glimmerplättchen, und Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triaryicarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Beispiele für Dispersionsfarbstoffe sind in Wasser schwerlösliche Farbmittel, die in mindestens einem organischen Medium wie beispielsweise organischem Polymer gut löslich sind, insbesondere sogenannten Solvent- und Dispersionsfarbstoffe wie beispielsweise
- C.I. Disperse Yellow: 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 198, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
- C.I. Disperse Orange: 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
- C.I. Disperse Red: 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 224, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 352, 356 und 367;
- C.I. Disperse Violet: 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;
- C.I. Disperse Blue: 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 351 und 359;
- C.I. Disperse Green: 1, 2, 5, 6 und 9;
- C.I. Disperse Brown: 1, 2, 3, 4, 4:1, 5, 7, 8, 9, 10, 11, 18, 19, 20 und 21;
- C.I. Disperse Black: 1, 3, 4, 5, 6, 7, 8, 9, 10, 11, 12, 13, 14, 15, 20, 22, 24, 25, 26, 27, 28, 29, 29:1, 30, 31, 32, 33, 34 und 36;
- C.I. Solvent Yellow: 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 144, 145, 146, 157, 160:1, 161, 162, 163, 167, 169, 172, 173, 176, 179, 180, 181, 182, 183, 184, 185, 186, 187, 189, 190 und 191;
- C.I. Solvent Orange: 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112 und 113;
- C.I. Solvent Yellow: 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 144, 145, 146, 157, 160:1, 161, 162, 163, 167, 169, 172, 173, 176, 179, 180, 181, 182, 183, 184, 185, 186, 187, 189, 190 und 191;
- C.I. Solvent Orange: 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, '110, 111, 112 und 113;
- C.I. Solvent Red: 1, 2, 3, 4, 8, 16, 17, 18, 19, 23, 24, 25, 26, 27, 30, 33, 35, 41, 42, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247 und 248;
- C.I. Solvent Violet: 2, 8, 9, 11, 13, 14, 21, 21:1, 26, 31, 36, 37, 38, 45, 46, 47, 48, 49, 50, 51, 55, 56, 57, 58, 59, 60 und 61;
- C.I. Solvent Blue: 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139 und 143;
- C.I. Solvent Green: 1, 3, 4, 5, 7, 28, 29, 32, 33, 34 und 35;
- C.I. Solvent Brown: 1, 3, 4, 5, 12, 20, 22, 28, 38, 41, 42, 43, 44, 52, 53, 59, 60, 61, 62 und 63;
- C.I. Solvent Black: 3, 5, 5:2, 7, 13, 22, 22:1, 26, 27, 28, 29, 34, 35, 43, 45, 46, 48, 49 und 50.

In einer Ausführungsform der vorliegenden Erfindung handelt es sich bei dispergierter Substanz (A) um eine Kombination von Dispergiermittel und Dispersionsfarbstoff oder Pigment, wobei Dispersionsfarbstoff bzw. Pigment selber nicht anionisch sind und auch keine COOH-Gruppen oder SO₃⁻ - oder OSO₃⁻-Gruppen aufweisen und der bzw. das mit einem Dispergiermittel dispergiert ist, welches anionisch ist, bevorzugt COOH-Gruppen oder SO₃⁻ - oder OSO₃⁻-Gruppen aufweist.

Beispiele für besonders geeignete Dispergiermittel mit SO₃⁻-Gruppen sind Ligninsulfonate, Napthalinmono- und -disulfonsäuren, Naphthalinsulfonsäure-Formaldehyd-Kondensationsprodukte und insbesondere mit Alkalimetallsalzen von Fettsäuren gemischte Naphthalinsulfönsäure-Formaldehyd-Kondensationsprodukte sowie aus US 5,186,846 bekannte Dispergiermittel.

Beispiele für besonders geeignete Dispergiermittel mit OSO₃⁻ -Gruppen sind sulfatierte und alkoxylierte, insbesondere ethoxylierte und gegebenenfalls alkylierte oder arylierte Phenole, besonders bevorzugt Verbindungen der allgemeinen Formeln I a und Ib 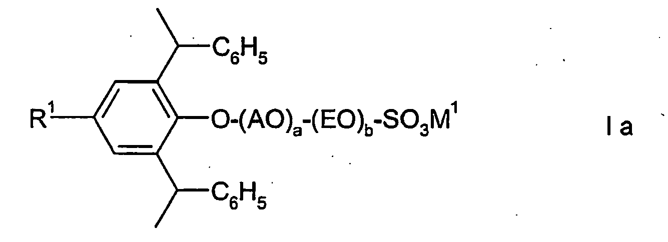 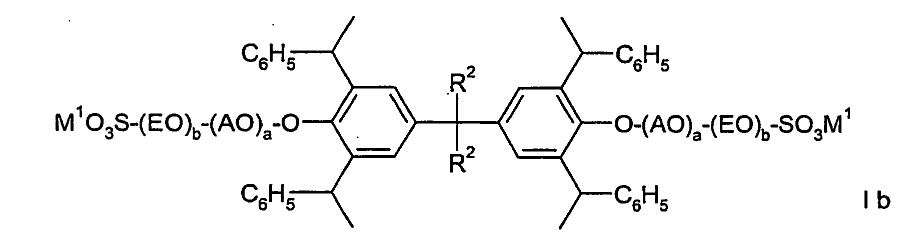 wobei die Variablen wie folgt definiert sind:
- R¹: gewählt aus Wasserstoff, Phenyl, CH(CH₃)-C₆H₅ und
- C₁-C₁₀-Alkyl,: verzweigt oder unverzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, n-Butyl und insbesondere iso-Propyl,
- R²: gleich oder verschieden und gewählt aus Wasserstoff, Phenyl und
C₁-C₁₀-Alkyl, verzweigt oder unverzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, n-Butyl und insbesondere Methyl oder Ethyl,
- AO: steht für Alkylenoxid, bevorzugt C₃-C₅-Alkylenoxid, beispielsweise Butylenoxid, Pentylenoxid und insbesondere Propylenoxid C₃H₆O,
- EO: steht für Ethylenoxid CH₂-CH₂-O,
- a: gleich oder verschieden und gewählt aus Zahlen im Bereich von 0 bis 150, bevorzugt bis 20, wobei a als Mittelwert (Zahlenmittel) auch eine nicht-ganze Zahl sein kann,
- b: gleich oder verschieden und gewählt aus Zahlen im Bereich von 15 bis 250, bevorzugt 20 bis 200 und besonders bevorzugt bis 35, wobei b als Mittelwert (Zahlenmittel) auch eine nicht-ganze Zahl sein kann,
wobei b ≥ a,
- M¹: gleich oder verschieden und gewählt aus Ammonium und Alkalimetallen, beispielsweise Lithium, Caesium, Rubidium und bevorzugt Natrium und Kalium.

Die Herstellung von Verbindungen der allgemeinen Formel Ia und Ib ist an sich bekannt und gelingt beispielsweise durch Umsetzung von Phenolen der allgemeinen Formel II a 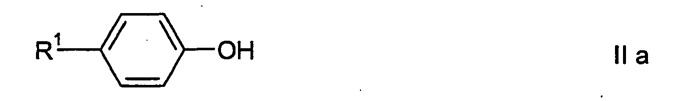 oder Bisphenolen der allgemeinen Formel II b 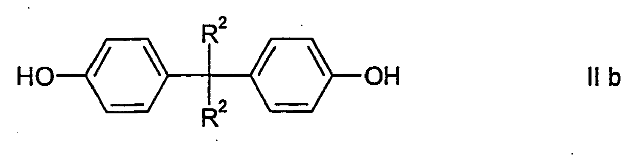 in denen die Variablen wie oben stehend definiert sind, mit 2, 3 oder 4 Äquivalenten Styrol in Gegenwart von saurem Katalysator, vorzugsweise Lewissäure. Danach setzt man mit gegebenenfalls mit Alkylenoxid, insbesondere mit C₃-C₅-Alkylenoxid, und danach mit Ethylenoxid um, beispielsweise in Gegenwart von saurem oder basischem Katalysator. Wünscht man solche Verbindungen der allgemeinen Formel Ia oder Ib herzustellen, bei denen a = 0 ist, so setzt man mit Ethylenoxid um und verzichtet auf eine Umsetzung mit Alkylenoxid wie beispielsweise C₃-C₅-Alkylenoxid. Danach kann man vollständig oder partiell sulfatieren, beispielsweise mit Sulfatierungsreagenzien, insbesondere Schwefeltrioxid oder Chlorsulfonsäure, und danach partiell oder vollständig mit Alkalihydroxid neutralisieren.

Das Gewichtsverhältnis Dispergiermittel zu Dispersionsfarbstoff bzw. Pigment kann dabei im Bereich von 1 : 10 bis 10: 1 liegen, bevorzugt 1 : 5 bis 5 : 1, besonders bevorzugt 1 : 2 bis 2 : 1.

In einer Ausführungsform der vorliegenden Erfindung setzt man nicht nur ein Dispergiermittel ein, sondern eine Mischung aus mindestens zwei Dispergiermitteln, von denen mindestens eines COOH-Gruppen oder SO₃⁻- oder OSO₃⁻-Gruppen aufweist und mindestens eines keine COOH-Gruppen oder SO₃⁻- oder OSO₃⁻-Gruppen aufweist. Beispiele für besonders gut geeignete Dispergiermittel, die keine COOH-Gruppen oder SO₃⁻- oder OSO₃⁻ -Gruppen aufweisen, sind nicht-sulfatierte Analoga von Verbindungen der allgemeinen Formel Ia und Ib, in denen die O-SO₃M-Gruppe durch eine Hydroxylgruppe ersetzt ist.

Im erfindungsgemäßen Verfahren eingesetzte Formulierung in polarem Medium und vorzugsweise wässrige Formulierung enthält weiterhin mindestens eine Hilfssubstanz (C), deren pKₐ-Wert höher ist als der von Substrat (B) und von gelöster oder dispergierter Substanz (A) und die ausgewählt ist aus dreidimensionalen, also vorzugsweise nicht-linearen amphoteren Kem-Schale-Polymeren. Beispielsweise kann der pKₐ-Wert von Hilfssubstanz (C) um 1 bis 15 Einheiten, bevorzugt 1 bis 6 Einheiten höher sein als der pKₐ-Wert von Substrat (B) und 1 bis 15 Einheiten, bevorzugt 1 bis 6 Einheiten höher sein als der pKₐ-Wert von gelöster oder dispergierter Substanz (A).

In einer Ausführungsform der vorliegenden Erfindung weist im erfindungsgemäßen Verfahren eingesetzte Hilfssubstanz (C) mindestens zwei pKₐ-Werte auf. Wenn Hilfssubstanz (C) mindestens zwei pKₐ-Werte aufweist, so sind vorzugsweise zwei pKₐ-Werte, besonders bevorzugt sämtliche pKₐ-Werte von Hilfssubstanz (C) 1 bis 15 Einheiten, bevorzugt 1 bis 6 Einheiten höher als der pKₐ-Wert von Substrat (B).

pKₐ-Werte von Hilfssubstanz (C), Substrat (B) und von gelöster oder dispergierter Substanz (A) lassen sich nach an sich bekannten Methoden bestimmen, beispielsweise titrimetrisch durch Bestimmung der Halbneutralisationspotenziale.

Vorzugsweise wird unter dreidimensional im Zusammenhang mit Hilfssubstanz (C) verstanden, dass es sich um partiell vernetzte amphotere Kern-Schale-Polymere handelt, wobei partiell vernetzt bedeutet, dass man mindestens ein amphoteres Kern-Schale-Polymer mit 0,1 bis 10 Gew.-% mindestens eines mindestens bifunktionellen Vernetzers oder mindestens ein Stickstoff-haltiges Polymer mit 0,1 bis 10 Gew.-% mindestens eines mindestens bifunktionellen Vernetzers umgesetzt hat. Geeignete mindestens bifunktionelle Vernetzer sind beispielsweise tri- und bevorzugt bifunktionelle Verbindungen, die niedermolekular oder vorzugsweise hochmolekular sein können, wobei niedermolekulare Vemetzer Molekulargewichte im Bereich von 80 bis 500 g/mol haben und hochmolekulare Vemetzer ein Molekulargewicht über 500 g/mol aufweisen.

Unter amphoter wird im Zusammenhang mit Hilfssubstanz (C) verstanden, dass Hilfssubstanz (C) vor dem Zeitpunkt des Aufbringens von Formulierung in polarem Medium und vorzugsweise wässriger Formulierung, die Hilfssubstanz (C) und gelöste oder dispergierte Substanz (A) enthält, auf Substrat (B) mindestens einen geladenen, bevorzugt kationisch geladenen Bezirk aufweist und weiterhin mindestens einen ungeladenen oder vorzugsweise anionischen Bezirk. Die Ladungsverteilung in Hilfssubstanz (C) ändert sich vorzugsweise während des Aufbringens von Formulierung in polarem Medium und vorzugsweise wässriger Formulierung, die Hilfssubstanz (C) und gelöste oder dispergierte Substanz (A) enthält, und insbesondere während des Kontaktierens. Vorzugsweise ändert sich während des Aufbringens die Ladungsverteilung in Hilfssubstanz (C) dergestalt, dass der relative Anteil an kationischer Ladung zunimmt oder der relative Anteil an anionischer Ladung abnimmt.

Kern-Schale-Polymere sind in einer Ausführungsform der vorliegenden Erfindung solche Polymere, die räumlich inhomogen zusammengesetzt sind. Bevorzugt weisen Kern-Schale-Polymere einen geladenen, bevorzugt kationisch geladenen Kern auf, den man beispielsweise durch (Co)polymerisation von einem oder mehreren Stickstoffhaltigen (Co)monomeren darstellen kann, und der einen der im vorstehenden Absatz beschriebenen Bezirke ausmacht, und eine Schale, die man auch als Hülle bezeichnen kann und die vor dem Aufbringen auf Substrat (B) ungeladen oder vorzugsweise negativ geladen ist.

In einer Ausführungsform der vorliegenden Erfindung kann die Schale bzw. Hülle nichtpolymerer Natur sein. Darunter werden solche Schalen bzw. Hüllen verstanden, die man durch polymeranaloge Umsetzung auf den Kern aufbringt, und zwar durch Umsetzung mit einem oder mehreren niedermofekularen Reagenzien beispielsweise mit einem Molekulargewicht im Bereich von 30 bis 500 g/mol.

In einer anderen Ausführungsform der vorliegenden Erfindung ist die Schale polymerer Natur. Darunter werden beispielsweise solche Schalen bzw. Hüllen verstanden, die man durch polymeranaloge Umsetzung auf den Kern aufbringt, und zwar Umsetzung mit einem oder mehreren hochmolekularen Reagenzien beispielsweise mit einem Molekulargewicht über 500 g/mol, und in einer anderen Ausführungsform solche Schalen bzw. Hüllen, die man durch Pfropfpolymerisation auf den Kern aufbringt.

Das Gewichtsverhältnis von Kern zu Schale liegt in einer Ausführungsform der vorliegenden Erfindung im Bereich von 1: 0,1 bis 1:10, bevorzugt 1: 0,2 bis 1:2. In einer Ausführungsform der vorliegenden Erfindung handelt es sich bei dreidimensionalem amphoterem Kem-Schale-Polymer um ein partiell vernetztes chemisch modifiziertes Polymer, das man beispielsweise durch eine oder mehrere Polymer-analoge Reaktionen chemisch modifiziert hat, von denen eine beispielsweise eine Michael-Addition oder eine Carboxymethylierung, beispielsweise in Form einer nucleophilen Substitution, sein kann.

In einer Ausführungsform der vorliegenden Erfindung ist Hilfssubstanz (C) erhältlich durch Umsetzung von
(C1) mindestens einem Stickstoff-haltigen Polymer, gewählt aus Polyalkylenpolyaminen, Polyamidoaminen, mit Ethylenimin gepfropften Polyamidoaminen, Polyetheraminen, mit
(C2) mindestens einem Carboxyalkylierungsreagenz, gewählt aus α,β-ungesättigten Carboxylverbindungen, deren Carboxylgruppen frei oder verkappt sein können, α-Halogencarboxylverbindungen, deren Carboxylgruppen frei oder verkappt sein können, Glycidylcarboxylverbindungen, deren Carboxylgruppen frei oder verkappt sein können,
   Cyanhydrinen, und Gemischen von mindestens einem Aldehyd und mindestens einem Alkalimetallcyanid,
(C3) und gegebenenfalls mindestens einem mindestens bifunktionellen Vernetzer, dessen funktionelle Gruppen gewählt werden aus Halogenhydrin-, Glycidyl-, Aziridin- oder Isocyanat-Einheiten oder Halogenatomen.

Stickstoff-haltige Polymere (C1) sind beispielsweise gewählt aus Polyalkylenpolyaminen, Polyamidoaminen, mit Ethylenimin gepfropften Polyamidoaminen und Polyetheraminen.

Unter als (C1) eingesetzten Polyalkylenpolyaminen sollen im Rahmen der vorliegenden Anmeldung vorzugsweise solche Polymere verstanden werden, die mindestens sechs Stickstoffatome und mindestens fünf C₂-C₁₀-Alkyleneinheiten, bevorzugt C₂-C₃-Alkyleneinheiten pro Molekül enthalten, zum Beispiel Pentaethylenhexamin, und insbesondere Polyethylenimine. Polyethylenimine können beispielsweise ein mittleres Molekulargewicht (M_{w}) von mindestens 300 g/mol haben, bevorzugt liegt das mittlere Molekulargewicht von Polyethyleniminen im Bereich von 800 bis 2.000.000 g/mol, besonders bevorzugt 20.000 bis 1.000.000 g/mol, ganz besonders bevorzugt bis 750.000 g/mol, ermittelt durch Lichtstreuung.

Als (C1) eingesetzte Polyalkylenpolyamine können partiell amidiert sein, erhältlich beispielsweise durch Reaktion von vorstehend beschriebenen Polyalkylenpolyaminen mit C₁-C₃₀-Carbonsäuren oder C₁-C₃₀-Carbonsäurederivaten wie beispielsweise C₁-C₃₀-Carbonsäureestem, insbesondere C₁-C₃₀-Carbonsäure-C₁-C₁₀-alkylestem, C₁-C₃₀-Carbonsäureanhydriden oder C₁-C₃₀-Carbonsäurehalogeniden wie beispielsweise C₁-C₂₈-Carbonsäurechloriden hergestellt. Als Komponente (C1) eingesetzte Polyalkylenpolyamine können für nachfolgende Umsetzungen vorzugsweise zu 1 bis 30, besonderes bevorzugt bis zu 20 mol-% amidiert werden, bezogen auf amidierbare N-Atome in (C1). Es ist ebenfalls möglich, dass die Amidierung durch Umsetzung von Polyalkylenpolyamin mit C₁-C₂₈-Alkyldiketen vorgenommen wird. Vorzugsweise weisen amidierte Polyalkylenpolyamine freie NH-Gruppen auf, damit sie mit (C2) und gegebenenfalls (C3) umgesetzt werden können. Geeignete C₁-C₃₀-Carbonsäuren für die Amidierung von vorstehend beschriebenen Polyalkylenpolyamine sind zum Beispiel Ameisensäure, Essigsäure, Propionsäure, Benzoesäure, Laurinsäure, Palmitinsäure, Stearinsäure, Ölsäure, Linolsäure und Behensäure, besonders geeignete C₁-C₃₀-Carbonäurederivate die Anhydride und Chloride der vorstehend genannten C₁-C₃₀-Carbonäuren. Besonders geeignete C₁-C₃₀-Carbonsäure-C₁-C₁₀-alkylester sind die Methyl- und Ethylester der vorstehend genannten C₁-C₃₀-Carbonsäuren.

Polyalkylenamine können auch in teilweise quaternierter (alkylierter) Form als (C1) eingesetzt werden. Geeignete Quaternierungsmittel (Alkylierungsmittel) sind zum Beispiel Alkylhalogenide, insbesondere C₁-C₁₀-Alkylchlorid wie Methylchlorid, Methylbromid, Methyliodid, Ethylchlorid, Ethylbromid, n-Butylchlorid, tert.-Butylchlorid, n-Hexylhlorid, weiterhin Epichlorhydrin, Dimethylsulfat, Diethylsulfat und Benzylchlorid. Falls quaternierte (alkylierte) Polyalkylenpolyamine als (C1) eingesetzt werden, beträgt der Grad der Quaternierung (Alkylierung) bevorzugt 1 bis 30, besonders bevorzugt bis zu 20 mol-%, bezogen auf quaternierbare (alkylierbare) N-Atome in (C1).

Polyalkylenamine und insbesondere Polyethylenimine können des Weiteren in partiell mit C₂-C₂₂-Epoxiden alkoxylierter Form als (C1) eingesetzt werden. Beispiele für geeignete C₂-C₂₂-Epoxide sind Ethylenoxid, Propylenoxid, n-Hexylenoxid, Styroloxid, hergestellt beispielsweise in Gegenwart von Basen als Katalysator. Falls teilweise mit C₂-C₂₂-Epoxiden alkoxylierte Polyalkylenpolyamine als (C1) eingesetzt werden, beträgt der Grad der Alkoxylierung bevorzugt 1 bis 30, besonders bevorzugt bis zu 20 mol-%, bezogen auf alkoxylierbare N-Atome in (C1).

Weiterhin sind Polyamidoamine als (C1) geeignet. Geeignete Polyamidoamine sind zum Beispiel durch Umsetzung von C₄-C₁₀-Dicarbonsäuren mit Polyalkylenpolyaminen erhältlich, die vorzugsweise 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Man kann auch Mischungen von vorstehend genannten Dicarbonsäuren einsetzen, zum Beispiel Mischungen von Adipinsäure und Glutarsäure oder Mischungen von Maleinsäure und Adipinsäure. Bevorzugt setzt man Adipinsäure zur Herstellung als (C1) geeigneten Polyamidoaminen ein. Geeignete Polyalkylenpolyamine, die mit vorstehend genannten Dicarbonsäuren kondensiert werden, sind zum Beispiel Diethylentriamin, Trietyhlentetramin, Dipropylentriamin, Tripropylentetramin, Dihexamethylentriamin, Aminopropylethylendiamin und bis-Aminopropyl-ethylen-diamin. Vorstehend genannte Polyalkylenpolyamine können auch in Form von Mischungen bei der Herstellung von als (C1) geeignetem Polyamidoamin eingesetzt werden. Die Herstellung von als (C1) geeignetem Polyamidoamin erfolgt vorzugsweise in Substanz, kann jedoch auch gegebenenfalls in inerten Lösungsmitteln vorgenommen werden. Die Kondensation von Dicarbonsäure mit Polyalkylenpolyamin erfolgt bei höheren Temperaturen, zum Beispiel im Bereich von 120 bis 220 °C. Das während der Reaktion gebildete Wasser wird aus dem Reaktionsgemisch abdestilliert. Die Kondensation kann gegebenenfalls in Gegenwart von Lactonen oder Lactamen von Carbonsäuren mit 4 bis 8 Kohlenstoffatomen vorgenommen werden. Pro mol Dicarbonsäure verwendet man im Allgemeinen 0,8 bis 1,4 mol eines Polyalkylenpolyamins. So erhältliche Polyamidoamine weisen primäre und sekundäre NH-Gruppen auf und sind in Wasser löslich.

Des Weiteren können als (C1) mit Ethylenimin gepfropfte Polyamidoamine eingesetzt werden, die dadurch herstellbar sind, dass man Ethylenimin in Gegenwart von Brönstedt-Säuren oder Lewis-Säuren, zum Beispiel Schwefelsäure, Phosphorsäure oder Bortrifluoridetherat, auf oben beschriebenes Polyamidoamin einwirken lässt. Dadurch wird Ethylenimin auf das betreffende Polyamidoamin aufgepfropft. Zum Beispiel kann man pro basischem Stickstoffatom im Polyamidoamin 1 bis 10 Ethylenimineinheiten aufpfropfen, d. h. auf 100 Gewichtsteile Polyamidoamin setzt man etwa 10 bis 500 Gewichtsteile Ethylenimin ein.

Weiterhin können als (C1) Polyetheramine eingesetzt werden, die beispielsweise aus DE-A 29 16 356 bekannt sind. Polyetheramine kann mann durch Kondensation von Di- und Polyaminen mit Chlorhydrinethern bei erhöhten Temperaturen wie beispielsweise 50 bis 150°C erhalten.

Als Ausgangsmaterial zur Herstellung von Polyetheraminen eingesetzte Polyamine können bis zu 10 Stickstoffatome pro Molekül enthalten.

Als Ausgangsmaterial zur Herstellung von Polyetheraminen eingesetzte Chlorhydrinether stellt man zum Beispiel her durch Umsetzung von Epihalogenhydrin, bevorzugt Epichlorhydrin mit mindestens einem mindestens zweiwertigen Alkohol, beispielsweise mit zweiwertigen Alkoholen mit 2 bis 5 Kohlenstoffatomen, Alkoxylierungsprodukten von zweiwertigen Alkoholen mit 2 bis 5 Kohlenstoffatomen mit bis zu 60 Alkylenoxieinheiten pro Molekül, Glycerin oder Polyglycerin, das bis zu 15 Glycerineinheiten pro Mol enthält, Erythrit oder Penthaerythrit.

Pro Mol eines der vorstehend genannten mindestens zweiwertigen Alkohole setzt man bevorzugt mindestens 2 bis 8 Mol Epichlorhydrin ein. Anschließend setzt man Di- oder Polyamin mit Chlorhydrinether üblicherweise bei Temperaturen von 1 bis 200°C um. Als (C1) geeignete Polyetherpolyamine kann man auch durch Kondensieren von Diethanolamin oder Triethanolamin nach an sich bekannten Verfahren herstellen, siehe beispielsweise US 4,404,362, US 4,459,220 und US 2,407,895.

Bevorzugt setzt man als (C1) Polyalkylenpolyamine ein, die gegebenenfalls bis maximal 20 mol-% amidiert sind, bezogen auf amidierbare N-Atome. Besonders bevorzugt setzt man als (C1) Polyalkylenpolyamine, insbesondere Polyethylenimine ein, die ganz besonders bevorzugt eine mittlere Molekulargewicht M_{w} von 800 bis 2.000.000 g/mol, besonders bevorzugt 20.000 bis 1.000.000 g/mol, ganz besonders bevorzugt 20.000 bis 750.000 g/mol aufweisen, beispielsweise bestimmt durch Lichtstreumethoden.

Zur Herstellung von Hilfssubstanz (C) setzt man mindestens ein Stickstoff-haltiges Polymer (C1) mit mindestens einem Carboxyalkylierungsreagenz (C2) um. Carboxyalkylierungsreagenzien (C2) sind gewählt aus
α,β-ungesättigten Carboxylverbindungen, deren Carboxylgruppen frei oder verkappt sein können,
α-Halogencarboxylverbindungen, deren Carboxylgruppen frei oder verkappt sein können,
Glycidylcarboxylverbindungen, deren Carboxylgruppen frei oder verkappt sein können,
Cyanhydrinen
und Gemischen von mindestens einem Aldehyd und mindestens einem Alkalimetallcyanid.

Als (C2) geeignete α,β-ungesättigten Carboxylverbindungen, deren Carboxylgruppen frei oder verkappt sein können, sind beispielsweise monoethylenisch ungesättigte α,β-ungesättigte Carboxylverbindungen zu nennen, die bevorzugt 3 bis 20 Kohlenstoffatome im Alkenylrest aufweisen. α,β-Ungesättigte Carboxylverbindungen, deren Carboxylgruppen frei oder verkappt sein können, werden gewählt aus α,β-ungesättigten Carbonsäuren, deren Salzen, Estern, Amiden oder Nitrilen.

Als (C2) geeignete α,β-ungesättigte Carbonsäuren sind beispielsweise Acrylsäure, Methacrylsäure, 3,3-Dimethylacrylsäure, Ethylacrylsäure, Maleinsäure, Fumarsäure, Ithaconsäure, Zimtsäure, Methylenmalonsäure und Citraconsäure. Auch mehrfach ethylenisch ungesättigte Carbonsäuren wie beispielsweise Sorbinsäure sind geeignet. Bevorzugt wird (C2) ausgewählt aus Acrylsäure, Methacrylsäure und Maleinsäure.

Weiterhin sind Salze der vorstehend genannten α,β-ungesättigten Carbonsäuren als (C2) geeignet. Geeignete Salze sind beispielsweise die Alkalimetall-, Erdalkalimetall- und Ammoniumsalze der vorstehend genannten α,β-ungesättigten Carbonsäuren. Bevorzugt sind die Natrium-, Kalium- und Ammoniumsalze. Ammoniumsalze können sich sowohl von Ammoniak als auch von Aminen oder Aminderivaten wie Ethanolamin, Diethanolamin und Triethanolamin ableiten. Als Erdalkalimetallsalze kommen im Allgemeinen Magnesium und Calciumsalze der vorstehend genannten α,β-ungesättigten Carbonsäuren in Betracht.

Als (C2) geeignete Ester der vorstehend genannten α,β-ungesättigten Carbonsäuren leiten sich von vorzugsweise von einwertigen C₁-C₂₀-Alkoholen oder zweiwertigen C₂-C₆-Alkandiolen ab. Als (C2) geeignete Ester sind beispielhaft zu nennen: (Meth)acrylsäuremethylester, (Meth)acryisäureethylester, (Meth)acrylsäure-n-Propylester, (Meth)acrylsäureisopropylester, (Meth)acrylsäure-n-butylester, (Meth)acrylsäureisobutylester, 2-Ethylhexyl(meth)acrylat, Palmithyl(meth)acrylat, Lauryl(meth)acrylat, Dimethylmaleinat, Diethylmaleinat, Mon- und Diisopropylmaleinat, 2-Hydroxy-n-propyl-(meth)acrylat, 3-Hydroxypropyl(meth)acrylat, 4-Hydroxybutyl(meth)acrylat und 6-Hydroxyhexyl(meth)acrylat.

Als (C2) geeignete Nitrile von vorstehend genannten α,β-ungesättigten Carbonsäuren sind bevorzugt Acrylnitril und Methacrylnitril zu nennen.

Als (C2) geeignete Amide von vorstehend genannten α,β-ungesättigten Carbonsäuren sind zum Beispiel Acrylamid und Methacrylamid zu nennen.

Weiterhin sind als Carboxalkylierungsreagenzien (C2) α-Halogencarboxylverbindungen geeignet, deren Carboxylgruppen frei oder verkappt sein können. Geeignete α-Halogencarboxylverbindungen sind bevorzugt α-Halogencarbonsäuren wie beispielsweise α-Chlorcarbonsäuren. Geeignete α-Chlorcarbonsäuren sind zum Beispiel Chloressigsäure, 2-Chlorpropionsäure, 3-Chlorpropionsäure, 2-Chlorbuttersäure, 3-Chlorbuttersäure, 4-Chlorbuttersäure, Dichloressigsäure und 2,2-Dichlorpropionsäure. Weitere geeignete α-Halogencarboxylverbindungen, deren Carboxylgruppen frei oder verkappt sein können, sind Chloressigsäure-C₁-C₁₀-alkylester, 2-Chlorpropionsäure-C₁-C₁₀-alkylester, 2-Chlorbuttersäure-C₁-C₁₀-alkylester, Dichloressigsäure-C₁-C₁₀-alkylester, 2,2-Dichlorpropionsäure und Chloracetonitril.

Weiterhin sind als Carboxalkylierungsreagenzien (C2) Glycidylcarboxylverbindungen geeignet, die vorzugsweise Formel III aufweisen: 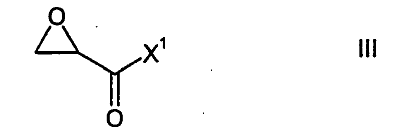 worin die Variablen wie folgt definiert sind:
- X¹: NH₂, OH, OM², OR³
- M²: gewählt aus einem Äquivalent Ammonium oder Alkalimetallion, insbesondere Na⁺ oder K⁺, und einem halben Äquivalent Mg²⁺ und Ca²⁺,
- R³: C₁-C₁₀-Alkyl, verzweigt oder unverzweigt, oder C₂-C₄-Hydroxyalkyl, insbesondere C₂-C₄-ω-Hydroxyalkyl.

Bevorzugte Verbindungen der Formel V sind Glycidylsäure und ihre Natrium-, Kalium-, Ammonium-, Magnesium- oder Calciumsalze, Glycidylsäureamid und Glycidylsäureester, insbesondere Glycidylsäure-C₁-C₁₀-alkylester wie Glycidylsäuremethylester, Glycidylsäureethylester, Glycidylsäure-n-propylester, Glycidylsäure-n-butylester, Glycidylsäureisobutylester, Glycidylsäure-2-ethylhexylester, Glycidylsäure-2-hydroxypropylester und Glycidylsäure-4-hydroxybutylester. Besonders bevorzugt sind Glycidylsäure, ihre Natrium-, Kalium- oder Ammoniumsalze und Glycidylsäureamid.

Weiterhin als Carboxalkylierungsreagenzien (C2) geeignet sind Cyanhydrine, beispielsweise Mandelsäurenitril und Hydroxyacetonitril.

Weiterhin als Carboxalkylierungsreagenzien (C2) geeignet sind Gemische von mindestens einem Aldehyd und mindestens einem Alkalimetallcyanid.

Geeignete Aldehyde sind beispielsweise C₁-C₁₀-Alkanale, bevorzugt Acetaldehyd und besonders bevorzugt Formaldehyd, weiterhin aromatische Aldehyde wie beispielsweise Benzaldehyd.

Geeignete Alkalimetallcyanide sind beispielsweise Kaliumcyanid und Natriumcyanid.

Die Carboxalkylierung von Stickstoff-haltigem Polymer (C1) mit mindestens einem Carboxalkylierungsreagenz (C2) kann man beispielsweise nach an sich bekannten Verfahren durchführen, zum Beispiel wie in WO 97/40087 beschrieben. Die Carboxalkylierung von Stickstoff-haltigem Polymer (C1) mit mindestens einem Carboxalkylierungsreagenz (C2) wird in einer bevorzugten Ausführungsform so durchgeführt, dass man zu einer wässrigen Lösung von Stickstoff-haltigem Polymer (C1) zum Beispiel innerhalb von 0,5 bis 10 Stunden gleichzeitig Aldehyd und Alkalimetallcyanid zuführt, wobei ein geringer Überschuss an Alkalimetallcyanid im Reaktionsgemisch bevorzugt wird. Man legt zum Beispiel eine geringe Menge an Alkalimetallcyanid im Reaktionsgemisch vor, beispielsweise 2 bis 10 mol-%, bezogen auf N-H-Gruppen in Stickstoff-haltigem Polymer (C1), und gibt anschließend Stickstoff-haltiges Polymer (C1), Aldehyd und Alkalimetallcyanid in einem Molverhältnis von etwa 1 : 1 getrennt voneinander oder als Mischung zu.

Pro mol NH-Gruppen in Stickstoff-haltiaem Polymer (C1) reagiert theoretisch ein Mol Aldehyd und ein Mol Alkalimetallcyanid. Da ein niedrigerer Carboxalkylierungsgrad angestrebt wird, setzt man, bezogen auf ein Mol NH-Gruppen in Stickstoff-haltigem Polymer (C1), einen molaren Unterschuss von 0,2 bis 0,95 Mol Aldehyd, bevorzugt bis 0,85 Mol Aldehyd und 0,2 bis 0,95 Mol Alkalimetallcyanid, bevorzugt bis 0,85 Mol ein. Die Carboxalkylierung kann man kontinuierlich oder diskontinuierlich oder semikontinuierlich durchführen.

Ganz besonders bevorzugt setzt man als (C2) eine monoethylenisch ungesättigte Carbonsäure ein, besonders bevorzugt Acrylsäure, Methacrylsäure oder Maleinsäure, ganz besonders bevorzugt Acrylsäure.

Hat man Carboxalkylierungsreagenz (C2) mit einer verkappten Carboxylgruppe, beispielsweise mit einer Nitrilgruppe, eingesetzt oder Carboxalkylierungsreagenz (C2) mit Carboxylgruppen in Form von beispielsweise Ester- oder Amidgruppen, so hydrolysiert man im Anschluss an die Umsetzung von Stickstoff-haltigem Polymer (C1) mit Carboxalkylierungsreagenz (C2) und gegebenenfalls mindestens bifunktionellem Vemetzer (C3).

Als (C3) sind mindestens bifunktionelle Vemetzer geeignet, die als funktionelle Gruppen mindestens eine Halogenhydrin-, Glycidyl-, Aziridin- oder Isocyanat-Einheit oder mindestens ein Halogenatom pro Molekül aufweisen. Dabei können die funktionellen Gruppen in (C3) jeweils gleich oder verschieden sein.

Als (C3) geeignete mindestens bifunktionelle Vemetzer sind zum Beispiel Epihalogenhydrine, bevorzugt Epichlorhydrin, sowie α,ω-bis-(Chlorhydrin)polyalkylenglykolether und die daraus durch Behandlung mit Basen erhältlichen α,ω-bis(Epoxide) von Polyalkylenglykolethem. α,ω-bis-(Chlorhydrin)polyalkylenglykolether stellt man zum Beispiel her, indem man Polyalkylenglykole im Molverhältnis 1 zu mindestens 2 bis 5 mit Epichlorhydrin umsetzt. Geeignete Polyalkylenglykole sind zum Beispiel Polyethylenglykol, Polypropylenglykol und Polybutylenglykole sowie Blockcopolymerisate von C₂-C₄-Alkylenoxiden. Die mittlere Molekulargewicht M_{w} von zur Herstellung von (C3) geeignetem Polyalkylenglykol kann im Bereich von 100 bis 6.000 g/mol, bevorzugt 300 bis 2.000 g/mol liegen. α,ω-bis-(Chlorhydrin)polyalkylenglykolether und Verfahren zu deren Herstellung werden zum Beispiel in US 4,144,123 beschrieben. Durch Behandlung mit Basen lassen sich aus α,ω-bis-(Chlorhydrin)polyalkylenglykolethem die entsprechenden α,ω-bis(Epoxide) von Polyalkylenglykolethem herstellen, die ebenfalls als bifunktionelle Vernetzer (C3) geeignet sind.

Des Weiteren sind als mindestens bifunktionelle Vemetzer (C3) α,ω-Dichlorpolyalkylenglykole geeignet, wie sie zum Beispiel in EP-A 0 025 515 beschrieben sind. Geeignete α,ω-Dichlorpolyalkylenglykole kann man beispielsweise herstellen, indem man zweibis vierwertige Alkohole, bevorzugt alkoxylierte zwei- bis vierwertige Alkohole entweder mit Thionylchlorid unter HCl-Abspaltung und nachfolgender beispielsweise katalytischer Zersetzung der entsprechenden Bischlorsulfonate unter Schwefeldioxidabspaltung umsetzt, oder mit Phosgen unter HCl-Abspaltung in die entsprechenden Bischlorkohlensäureester überführt und daraus anschließend durch katalytische Zersetzung unter Kohlendioxidabspaltung α,ω-Dichlorpolyalkylenglykole erhält. Bei alkoxylierten zwei bis vierwertigen Alkoholen handelt es sich dabei bevorzugt um ethoxyliertes und/oder propoxyliertes Glykol, Glycerin oder Pentaerythrit, die man mit 1 bis 100, insbesondere 4 bis 40 mol Ethylenoxid bzw. Propylenoxid pro Mol Glykol umgesetzt hat.

Weitere geeignete mindestens bifunktionelle Vemetzer (C3) sind α,ω- oder vicinale Dichloralkane, zum Beispiel 1,2-Dichlorethan, 1-Brom-2-chlorethan, 1,2-Dichlorpropan, 1,3-Dichlorpropan, 1,4-Dichlorbutan und 1,6-Dichlorhexan. Weitere geeignete mindestens bifunktionelle Vemetzer (C3) sind Umsetzungsprodukte von mindestens dreiwertigen Alkoholen mit Epichlorhydrin zu Reaktionsprodukten, die mindestens zwei Chlorhydrin-Einheiten aufweisen. Beispielsweise verwendet man als mehrwertige Alkohole Glycerin, ein oder mehrfach ethoxylierte und/oder propoxylierte Glycerine, Polyglycerine mit 2 bis 15 Glycerin-Einheiten pro Molekül sowie gegebenenfalls ethoxylierte und/oder propoxylierte Polyglycerine, die als solche beispielsweise aus DE-A 29 16 356 bekannt sind.

Weiterhin sind mindestens bifunktionelle Vernetzer (C3) geeignet, die gegebenenfalls blockierte Isocyanatgruppen enthalten, zum Beispiel Trimethylhexamethylendiisocyanat blockiert mit 2,2,3,6-Tetramethylpiperidinon-4. Derartige mindestens bifunktionelle Vernetzer (C3) sind als solche zum Beispiel aus DE-A 40 28 285 bekannt. Des Weiteren sind Aziridin-Einheiten enthaltende mindestens bifunktionelle Vernetzer (C3) geeignet, beispielsweise solche auf Basis von Polyethern oder substituierten Kohlenwasserstoffen, zum Beispiel 1,6-bis-N-Aziridinohexan.

Besonders bevorzugte mindestens bifunktionelle Vemetzer (C3) sind Epihalohydrine, bevorzugt Epichlorhydrin, α,ω-bis-(Chlorhydrin)Polyalkylenglykolether, α,ω-bis(Epoxide) von Polyalkylenglykolether und/oder Bisglycidylether von Polyalkylenglykolen.

In einer Ausführungsform der vorliegenden Erfindung setzt man zur Herstellung von Hilfssubstanz (C) einen mindestens bifunktionellen Vemetzer (C3) ein.

In einer anderen Ausführungsform der vorliegenden Erfindung setzt man zur Herstellung von Hilfssubstanz (C) Mischungen von zwei oder mehr mindestens bifunktionellen Vernetzern (C3) ein.

In einer anderen Ausführungsform der vorliegenden Erfindung, in der man (C1) aus Polyalkylenaminen und insbesondere Polyethyleniminen gewählt hat, kann man bei der Herstellung von Hilfssubstanz (C) mit mindestens bifunktionellem Vemetzer (C3) verzichten.

Hilfssubstanz (C) kann man nach an sich bekannten Verfahren herstellen. Beispielsweise kann man (C1) zunächst mit (C2) zur Reaktion bringen und danach (C3) zusetzen. Auch kann man die (C3) und (C2) gleichzeitig mit (C1) umsetzen. Bevorzugt ist es, (C1) zunächst mit (C3) zur Reaktion bringen und danach (C2) zusetzen.

In einer Ausführungsform der vorliegenden Erfindung führt man die Umsetzung von (C1) mit (C2) und gegebenenfalls (C3) bei Temperaturen im Bereich von 30 bis 150°C, bevorzugt 55°C bis 100°C durch.

In einer Ausführungsform der vorliegenden Erfindung führt man die Umsetzung von (C1) mit (C2) und gegebenenfalls (C3) bei Drücken im Bereich von 0,1 bis 10 bar, besonders bevorzugt bei Normaldruck oder 1 bis 5 bar durch.

In einer Ausführungsform der vorliegenden Erfindung führt man die Umsetzung von (C1) mit (C2) und gegebenenfalls (C3) in wässrigem Milieu durch, in dem ein oder mehrere organische Lösungsmittel enthalten sein können. Bevorzugt verzichtet man jedoch bei der Umsetzung von (C1) mit (C2) und gegebenenfalls (C3) auf den Einsatz von organischen Lösungsmitteln und führt sie in Wasser durch.

In einer Ausführungsform der vorliegenden Erfindung führt man die Umsetzung von (C1) mit (C2) in Gegenwart von mindestens einem Radikalfänger durch, beispielsweise Hydrochinon, Hydrochinonmonomethylether, Phenothiazin, gehinderten Aminen (HALS) wie beispielsweise 2,2,6,6-Tetramethylpiperidin, oder substituierten Phenolen wie beispielsweise 2,6-Di-tert-butylphenol.

In einer Ausführungsform der vorliegenden Erfindung führt man die Umsetzung von (C1) mit (C2) in Gegenwart von starker Base durch, beispielsweise Natriumhydroxid oder Kaliumhydroxid.

Das molare Verhältnis zwischen den Komponenten (C1) und (C2) wird bevorzugt so gewählt, dass das molare Verhältnis der Wasserstoffatome am Stickstoff in (C1) zu der Komponente (C2) im Bereich von 1 zu 0,2 bis 1 zu 0,95, bevorzugt 1 zu 0,3 bis 1 zu 0,9, besonders bevorzugt 1 zu 0,4 bis 1 zu 0,85 liegt.

In einer Ausführungsform der vorliegenden Erfindung handelt es sich bei erfindungsgemäß eingesetzter Hilfssubstanz (C) um anvernetzte Polymere, d. h., 0,1 bis zu 10 mol-%, bevorzugt bis zu 5 mol-%, besonders bevorzugt bis zu 2 mol% der in Stickstoff-haltigem Polymer (C1) enthaltenen N-H-Bindungen sind mit mindestens einem mindestens bifunktionellen Vernetzer (C3) umgesetzt.

In einer Ausführungsform der vorliegenden Erfindung hat Hilfssubstanz (C) ein Molekulargewicht M_{w} im Bereich von 1.000 bis 2.000.000 g/mol, bevorzugt im Bereich von 20.000 bis 1.000.000 g/mol.

Hilfssubstanz (C) fällt üblicherweise als wässrige Lösung oder Dispersion an, aus der man Hilfssubstanz (C) nach an sich bekannten Verfahren isolieren und aufreinigen kann. In vielen Fällen kann man jedoch die anfallende wässrige Lösung von Hilfssubstanz (C) zur Herstellung von erfindungsgemäßer wässriger Formulierung einsetzen und auf Reinigungsschritte verzichten.

In einer speziellen Ausführungsform der vorliegenden Erfindung führt man das erfindungsgemäße Verfahren als Ink-Jet-Verfahren nach dem Transferdruckverfahren durch, indem man eine Ink-Jet-Tinte, die mindestens einen Dispersionsfarbstoff als dispergierte Substanz (A) und mindestens eine Hilfssubstanz (C) enthält, auf ein Transferpapier als Substrat (B) aufbringt,
wobei der pKₐ-Wert von Hilfssubstanz (C) höher ist als vom Transferpapier als Substrat (B) und von Dispersionsfarbstoff gegebenenfalls in Kombination mit mindestens einem Dispergiermittel als dispergierter Substanz (A)
und wobei Hilfssubstanz (C) gewählt wird aus dreidimensionalen amphoteren Kern-Schale-Polymeren,
und transferiert anschließend bei Temperaturen im Bereich von 150 bis 250°C vorzugsweise durch Sublimation auf ein zweites Substrat, das Dispersionsfarbstoffe molekular lösen kann wie beispielsweise Polyamid, Polyacrylnitril, Viskose, Acetat und vorzugsweise Polyester, insbesondere synthetische Fasern beispielsweise aus Polyamid, Viskose, Acetat und/oder Polyester.

In einer Ausführungsform der vorliegenden Erfindung erreicht man die Temperaturen im Bereich von 150 bis 250°C durch Verwendung einer Transferpresse oder eines Kalanders.

Ein weiterer Gegenstand der vorliegenden Erfindung sind Formulierungen, vorzugsweise wässrige Formulierungen, enthaltend
mindestens eine gelöste oder dispergierte Substanz (A) und
mindestens eine Hilfssubstanz (C), wobei der pKₐ-Wert von Hilfssubstanz (C) höher ist als von gelöster oder dispergierter Substanz (A),
wobei man gelöste oder dispergierte Substanz (A) wählt aus wasserlöslichen Farbstoffen, selbstdispergierenden Farbmitteln, Kombinationen aus Dispersionsfarbstoff mit Dispergiermittel und Kombinationen aus Pigment mit Dispergiermittel und wobei Hilfssubstanz (C) gewählt wird aus dreidimensionalen amphoteren Kern-Schale-Polymeren, bei denen es sich um partiell vernetztes chemisch modifiziertes Polymer mit kationischem Kern, der erhältlich ist durch (Co)polymerisation von einem oder mehreren Stickstoffhaltigen (Co)monomeren, und ungeladener oder negativ geladener Hülle handelt.

Gelöste oder dispergierte Substanz (A) und Hilfssubstanz (C) sowie Verfahren zu ihrer Herstellung sind vorstehend beschrieben.

In einer Ausführungsform der vorliegenden Erfindung handelt es sich bei als Hilfssubstanz (C) gewählten dreidimensionalen amphoteren Kern-Schale-Polymeren um partiell vernetztes chemisch modifiziertes Polymer mit kationischem Kern.

In einer Ausführungsform der vorliegenden Erfindung handelt es sich bei gelöster oder dispergierter Substanz (A) um einen Dispersionsfarbstoff.

In einer Ausführungsform der vorliegenden Erfindung handelt es sich bei gelöster oder dispergierter Substanz (A) um eine Substanz mit SO₃⁻- oder OSO₃⁻ -Gruppen.

In einer bevorzugten Ausführungsform der vorliegenden Erfindung ist Hilfssubstanz (C) erhältlich durch Umsetzung von
(C1) mindestens einem Stickstoff-haltigen Polymer, gewählt aus Polyalkylenpolyaminen, Polyamidoaminen, mit Ethylenimin gepfropften Polyamidoaminen, Polyetheraminen,
(C2) mindestens einem Carboxyalkylierungsreagenz, gewählt aus α,β-ungesättigten Carboxylverbindungen, deren Carboxylgruppen frei oder verkappt sein können, α-Halogencarboxylverbindungen, deren Carboxylgruppen frei oder verkappt sein können, Glycidylcarboxylverbindungen, deren Carboxylgruppen frei oder verkappt sein können,
   Cyanhydrinen, und Gemischen von mindestens einem Aldehyd und mindestens einem Alkalimetallcyanid,
(C3) gegebenenfalls mindestens einem mindestens bifunktionellen Vernetzer, dessen funktionelle Gruppen gewählt werden aus Halogenhydrin-, Glycidyl-, Aziridin- oder Isocyanat-Einheiten oder Halogenatomen.

In einer Ausführungsform der vorliegenden Erfindung enthalten erfindungsgemäße vorzugweise wässrige Formulierungen
0,01 bis 40 Gew.-%, bevorzugt 0,05 bis 30 Gew.-% und besonders bevorzugt 0,1 bis 20 Gew.-% gelöste bzw. dispergierte Substanz (A) und
0,001 bis 20 Gew.-%, bevorzugt 0,01 bis 10 Gew.-% und besonders bevorzugt 0,1 bis 1 Gew.-% Hilfssubstanz (C), jeweils bezogen auf gesamte erfindungsgemäße Formulierung.
Ein spezieller Aspekt der vorliegenden Erfindung sind Tinten für das Ink-Jet-Verfahren, enthaltend mindestens eine erfindungsgemäße vorzugsweise wässrige Formulierung.

Erfindungsgemäße Tinten für das Ink-Jet-Verfahren enthalten mindestens eine gelöste oder bevorzugt dispergierte Substanz (A) und mindestens eine Hilfssubstanz (C), wobei der pKₐ-Wert von Hilfssubstanz (C) höher ist als von gelöster oder dispergierter Substanz (A)
und wobei Hilfssubstanz (C) gewählt wird aus dreidimensionalen amphoteren Kern-Schale-Polymeren.

Ein weiterer Aspekt der vorliegenden Erfindung sind Tintensätze, umfassend mehrere erfindungsgemäße Tinten für das Ink-Jet-Verfahren. Erfindungsgemäße Tintensätze umfassen keine zusätzliche Flüssigkeit, die ein anionisches Polymer wie beispielsweise Poly(meth)acrylsäure oder Styrol-(meth)acrylsäure-Copolymer enthält.

In einer Ausführungsform der vorliegenden Erfindung können erfindungsgemäße vorzugsweise wässrige Formulierungen und insbesondere erfindungsgemäße Tinten für das Ink-Jet-Verfahren noch mindestens einen Zuschlagstoff (D) enthalten.

Im Rahmen der vorliegenden Erfindung werden Tinten für das Ink-Jet-Verfahren auch als Ink-Jet-Tinten oder kurz als Tinten bezeichnet.

In einer Ausführungsform der vorliegenden Erfindung stellt man erfindungsgemäße Ink-Jet-Tinten so her, dass man erfindungsgemäße vorzugsweise wässrige Formulierung mit Wasser verdünnt und gegebenenfalls mit einem oder mehreren Zuschlagstoffen (D) vermischt.

In einer Ausführungsform der vorliegenden Erfindung stellt man den Feststoffgehalt von erfindungsgemäßen Ink-Jet-Tinten so ein, dass er im Bereich von 3 bis 40 %, bevorzugt bis 35 %, besonders bevorzugt 5 bis 30 % liegt.

Als Zuschlagstoff (D) können erfindungsgemäße Tinten für das Ink-Jet-Verfahren ein oder mehrere organische Lösungsmittel enthalten. Niedermolekulares Polytetrahydrofuran (Poly-THF) ist ein bevorzugter Zuschlagstoff (D), es kann als einziges oder vorzugsweise im Gemisch mit einem oder mehreren schwer verdampfbaren, in Wasser löslichen oder mit Wasser mischbaren organischen Lösungsmitteln eingesetzt werden.

Bevorzugt verwendetes niedermolekulares Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol (entsprechend einer Molekulargewichtsverteilung).

Polytetrahydrofuran kann auf bekannte Weise über kationische Polymerisation von Tetrahydrofuran hergestellt werden. Dabei entstehen lineare Polytetramethylenglykole.

Wenn Polytetrahydrofuran im Gemisch mit weiteren organischen Lösungsmitteln als Zuschlagstoff (D) verwendet wird, werden hierfür im Allgemeinen schwer verdampfbare (d.h. in der Regel bei Normaldruck einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, 1,1,1-Trimethylolpropan, Pentaerythrit, Pentite wie Arabit, Adonit und Xylit und Hexite wie Sorbit, Mannit und Dulcit.

Weitere geeignete Lösungsmittel sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten Mₙ von 100 bis 6000 g/mol, insbesondere bis 1500 g/mol, vor allem von 150 bis 500 g/mol. Als Beispiele seien Di-, Tri- und Tetraethylenglykol, Diethylenglykolmonomethyl-, -ethyl-, -n-, -iso-propyl -propyl- und -n-butylether, Triethylenglykolmonomethyl-, -ethyl-, -n-propyl-, -iso-propyl - und -n-butylether, Di-, Tri- und Tetra-1,2- und -1,3-propylenglykol und Di-, Tri- und Tetra-1,2- und -1,3-propylenglykolmonomethyl-, -ethyl-, -n-propyl-, -iso-propyl- und -n-butylether genannt.

Weiterhin als Zuschlagstoff (D) geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol (M_{w} 150 bis 500 g/mol), Diethylenglykolmonobutylether, Triethylenglykolmonobutylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmitteln gemischt werden.

In einer Ausführungsform der vorliegenden Erfindung können erfindungsgemäße Tinten für das Ink-Jet-Verfahren 0,1 bis 80 Gew.-%, bevorzugt 2 bis 60 Gew.-%, besonders bevorzugt 5 bis 50 Gew.-% und ganz besonders bevorzugt 10 bis 40 Gew.-% nicht-wässrige Lösungsmittel enthalten.

Nicht-wässrige Lösungsmittel als Zuschlagstoffe (D), insbesondere auch die genannten besonders bevorzugten Lösungsmittelkombinationen, können vorteilhaft durch Harnstoff (in der Regel 0,5 bis 5 Gew.-%, bezogen auf das Gewicht der Formulierung) ergänzt werden, der die wasserrückhaltende Wirkung des Lösungsmittelgemisches noch verstärkt.

Erfindungsgemäße Tinten für das Ink-Jet-Verfahren können weitere Zuschlagstoffe (D), wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel-Marken der Fa. Avecia Lim.) und dessen Alkalimetallsalze, Glutardialdehyd und/oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Netzmittel (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, AIkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil erfindungsgemäßer Tinten für das Ink-Jet-Verfahren sind, beträgt ihre Gesamtmenge in der Regel 2 Gew.-%, insbesondere 1 Gew.-%, bezogen auf das Gewicht der erfindungsgemäßen Farbmittelzubereitungen und insbesondere der erfindungsgemäßen Tinten für das Ink-Jet-Verfahren.

Weitere geeignete Zuschlagstoffe (D) sind gegebenenfalls alkoxylierte Acetylendiole, beispielsweise der allgemeinen Formel VI 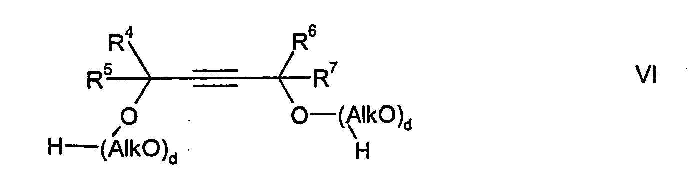 in denen die Variablen wie folgt definiert sind:
- AlkO: steht für gleiche oder verschiedene Alkylenoxideinheiten, beispielsweise Propylenoxideinheiten, Butylenoxideinheiten und insbesondere Ethylenoxideinheiten,
- R⁴, R⁵, R⁶, R⁷: sind jeweils gleich oder verschieden und gewählt aus C₁-C₁₀-Alkyl, unverzweigt oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl; und Wasserstoff;
- d: ist gleich oder verschieden und gewählt aus ganzen Zahlen im Bereich von 0 bis 50, bevorzugt 0 oder 1 bis 30 und besonders bevorzugt 3 bis 20.

In einer bevorzugten Ausführungsform der vorliegenden Erfindung sind R⁵ oder R⁷ gleich Methyl.

In einer bevorzugten Ausführungsform der vorliegenden Erfindung sind R⁵ und R⁷ gleich Methyl, und R⁴ und R⁶ gleich Isobutyl.

Andere bevorzugte Zuschlagstoffe (D) sind gegebenenfalls alkoxylierte Siliziumverbindungen insbesondere der Formel VII a bis VII d

[(CH₃)₃Si-O]₂-Si(CH₃)-(CH₂)₃-O(CH₂CH₂O)_{d}-H VII a

H(OCH₂CH₂)_{d}-O-(CH₂)₃-Si(CH₃)[OSi(CH₃)₃][OSi(CH₃)₂-OSi(CH₃)₃] VII b

H(PO)_{d}-(OCH₂CH₂)_{d}-O-(CH₂)₃-Si(CH₃)[OSi(CH₃)₂-OSi(CH₃)₃]₂ VII c

H(PO)_{d}-(OCH₂CH₂)_{d}-O-(CH₂)₃-Si(CH₃)[OSi(CH₃)₃][OSi(CH₃)₂]ᵤ-OSi(CH₃)₃ VII d

in der die Variable d jeweils gleich oder verschieden und wie vorstehend definiert ist und u eine ganze Zahl im Bereich von 1 bis 10 bedeutet.

In einer Ausführungsform der vorliegenden Erfindung haben erfindungsgemäße Tinten für das Ink-Jet-Verfahren eine dynamische Viskosität im Bereich von 2 bis 80 mPa·s, bevorzugt 3 bis 40 mPa·s, besonders bevorzugt bis 30 mPa·s, gemessen bei 23°C nach DIN 53018.

In einer Ausführungsform der vorliegenden Erfindung beträgt die Oberflächenspannung erfindungsgemäßer Tinten für das Ink-Jet-Verfahren 24 bis 70 mN/m, insbesondere 25 bis 60 mN/m, gemessen bei 25°C nach DIN 53993.

In einer Ausführungsform der vorliegenden Erfindung liegt der pH-Wert erfindungsgemäßer Tinten für das Ink-Jet-Verfahren bei 5 bis 10, vorzugsweise bei 7 bis 9.

Erfindungsgemäße Tinten für das Ink-Jet-Verfahren zeigen insgesamt vorteilhafte Anwendungseigenschaften, vor allem gutes Anschreibverhalten und gutes Dauerschreibverhalten (Kogation) sowie, insbesondere bei Verwendung der besonders bevorzugten Lösungsmittelkombination, gutes Trocknungsverhalten, und ergeben Druckbilder hoher Qualität, d.h. hoher Brillanz und Farbtiefe sowie hoher Reib-, Licht-, Wasser- und Nassreibechtheit.

Gemäß einer weiteren Ausführungsform der vorliegenden Erfindung kann man mindestens zwei, bevorzugt mindestens drei verschiedene erfindungsgemäße Tinten für das Ink-Jet-Verfahren zu Tintensätzen kombinieren, wobei verschiedene erfindungsgemäße Ink-Jet-Tinten jeweils unterschiedliche Farbmittel mit jeweils unterschiedlicher Farbe enthalten, beispielsweise gelb, magenta, cyan und schwarz.

Ein weiterer Gegenstand der vorliegenden Erfindung ist ein Verfahren zur Herstellung von erfindungsgemäßen vorzugsweise wässrigen Formulierungen, im Folgenden auch erfindungsgemäßes Herstellverfahren genannt.

In einer Ausführungsform führt man das erfindungsgemäße Herstellverfahren so durch, dass man mindestens eine Substanz (A) in polarem und vorzugsweise wässrigem Medium löst bzw. dispergiert und mit mindestens einer Hilfssubstanz (C) vermischt.

Polares Medium kann beispielsweise Alkohol sein, bevorzugt Methanol oder Ethanol oder Isopropanol.

Wässriges Medium im Sinne der vorliegenden Erfindung kann entweder reines Wasser sein oder bevorzugt eine wässrige Lösung von Zuschlagstoffen (D), wie sie beispielsweise in Beschichtungsverfahren oder Druckverfahren, insbesondere in Druckverfahren nach dem Ink-Jet-Verfahren üblich ist. Bevorzugte Zuschlagstoffe (D) für das Ink-Jet-Verfahren sind vorstehend aufgeführt.

Natürlich kann man auch Mischungen von Wasser und Methanol oder Wasser und Ethanol oder Wasser und Isopropanol als polares Medium einsetzen.

In einer speziellen Ausführungsform der vorliegenden Erfindung führt man das erfindungsgemäße Herstellverfahren so durch, dass man mindestens eine Substanz (A) in polarem und vorzugsweise wässrigem Medium mit mindestens einer Hilfssubstanz (C) vermischt dispergiert, beispielsweise in einer Kugelmühle.

Ein weiterer Aspekt der vorliegenden Erfindung sind Substrate, bedruckt nach dem erfindungsgemäßen Verfahren. Erfindungsgemäße bedruckte Substrate zeichnen sich durch sehr gute Reibechtheiten wie beispielsweise Trockenreibechtheit und Nassreibechtheit aus und weiterhin durch ausgesprochen scharfe Linien von aufgebrachter gelöster bzw. dispergierter Substanz (A).

Ein weiterer Aspekt der vorliegenden Erfindung ist die Verwendung von erfindungsgemäßen bedruckten Substraten als Übertragungsmedium im Transferdruckverfahren.

Ein weiterer Aspekt der vorliegenden Erfindung ist ein Verfahren zum Kolorieren von Polyester oder polyesterhaltige Materialien nach dem Transferdruckverfahren unter Verwendung von erfindungsgemäßen bedruckten Substraten als Übertragungsmedium, wobei Substrat (B) vorzugsweise ein Transferpapier mit einem pKₐ-Wert von 4 bis 6 ist.

Ein weiterer Aspekt der vorliegenden Erfindung sind Substrate aus Polyamid, Polyacrylnitril, Viskose, Acetat und vorzugsweise Polyester oder polyesterhaltigem Material, koloriert unter Verwendung von erfindungsgemäßen bedruckten Substraten oder nach einem erfindungsgemäßen Verfahren. Erfindungsgemäße kolorierte Substrate aus Polyamid, Polyacrylnitril, Viskose, Acetat und vorzugsweise Polyester oder polyesterhaltigem Material zeichnen sich durch sehr gute Reibechtheiten wie beispielsweise Trockenreibechtheit und Nassreibechtheit aus und weiterhin durch ausgesprochen scharfe Linien von aufgebrachter gelöster bzw. dispergierter Substanz (A). Insbesondere lassen sich Muster besonders gut und brillant auf Substrate aus Polyamid, Polyacrylnitril, Viskose, Acetat und vorzugsweise Polyester oder polyesterhaltiges Material übertragen.

Die Erfindung wird durch Arbeitsbeispiele erläutert.

### Allgemeine Vorbemerkungen:

Feststoffgehalt: Die Angaben in % beziehen sich im Rahmen der vorliegenden Erfindung stets auf Gew.-%, wenn nicht ausdrücklich anders angegeben.

Der K-Wert nach Fikentscher stellt ein Maß für das Molekulargewicht von beispielsweise Hilfssubstanzen (C) dar und wurde gemäß H. Fikentscher, Cellulose-Chemie, 13, 38 bis 64 und 71 bis 74 (1932) als 1 Gew.-% Lösung in Wasser bei 23°C bestimmt.

### I. Herstellung von Hilfssubstanzen (C)

### I.1. Herstellung von Hilfssubstanz C-1

In einem Vierhalskolben mit Metallrührer und Rückflusskühler wurden unter Stickstoffatmosphäre 196 g Polyethylenimin (C1.1, wasserfrei, M_{w} 25.000 g/mol) vorgelegt und mit 588 g destilliertem Wasser auf 25 Gew.-% verdünnt. Es wurde unter Rühren auf 70°C aufgeheizt, und bei 70°C wurden 40 ml einer 22 Gew.-% wässrigen Lösung von C3.1 innerhalb von 5 Minuten zugegeben. C3.1 war ein Umsetzungsprodukt eines Polyethylenglykols mit M_{w} 1500 g/mol mit 2 Äquivalenten Epichlorhydrin. Nach beendeter Zugabe von C3.1 wurde die Reaktionsmischung für 5 Stunden bei 70°C gerührt. Anschließend wurde auf 80°C aufgeheizt und bei 80°C innerhalb von 3 Stunden 263,2 g Acrylsäure (C2.1) zugetropft. Nach beendeter Zugabe wurde die so erhältliche Reaktionsmischung bei 80°C für 1 weitere Stunde weitergerührt und danach auf Zimmertemperatur abgekühlt. Man erhielt eine viskose, gelb-orange Lösung von Hilfssubstanz C-1 mit einem Feststoffgehalt von 42% (2h, Vakuum/120°C) und einem K-Wert nach Fikentscher (1% in Wasser) von 17.

Der pKₐ-Wert von Hilfssubstanz C-1 betrug 6,3.

### 1.2. Herstellung von Hilfssubstanz C-2

In einem Vierhalskolben mit Metallrührer und Rückflusskühler wurden unter Stickstoffatmosphäre 350 g einer 56 Gew.-% wässrigen Lösung von Polyethylenimin (C1.1, M_{w} 25.000 g/mol) vorgelegt und mit 456 g destilliertem Wasser auf 24% verdünnt. Es wurde unter Rühren auf 80°C aufgeheizt und bei 80°C innerhalb von 3 Stunden 259,4 g Acrylsäure (C2.1) zugetropft. Nach beendeter Zugabe wurde die Lösung bei 80°C für weitere 6 Stunden weitergerührt. Man erhielt eine viskose, gelb-orange Lösung von Hilfssubstanz C-2 mit einem Feststoffgehalt von 43,2% (2h, Vakuum/120°C) und einem K-Wert nach Fikentscher (1% in Wasser) von 14,9.

Der pKₐ-Wert von Hilfssubstanz C-2 betrug 6,5.

### I.3. Herstellung von Hilfssubstanz C-3

In einem Vierhalskolben mit Metallrührer und Rückflusskühler wurden unter Stickstoffatmosphäre 350 g einer 56 Gew.-% wässrigen Lösung von Polyethylenimin (C1.1, M_{w} 25.000 g/mol) vorgelegt und mit 456 g destilliertem Wasser verdünnt. Es wurde unter Rühren auf 70°C aufgeheizt, und bei 70°C wurden 18 ml einer 50 Gew.-% wässrigen Lösung von C3.3 innerhalb von 5 Minuten zugegeben. C3.3 war ein Umsetzungsprodukt eines Polyethylenglykols mit mittlerer Molekulargewicht M_{w} 660 g/mol mit 2 Äquivalenten Epichlorhydrin. Nach beendeter Zugabe wurde die Reaktionsmischung für 5 Stunden bei 70°C gerührt. Anschließend wurde die Reaktionsmischung auf 80°C aufgeheizt und bei 80°C innerhalb von 3 Stunden tropfenweise mit 259,4 g Acrylsäure (C2.1) versetzt. Nach beendeter Zugabe wurde die Reaktionsmischung bei 95°C für eine weitere Stunde gerührt und danach auf Zimmertemperatur abgekühlt. Man erhielt eine viskose, gelb-orange Lösung von Hilfssubstanz C-3 mit einem Feststoffgehalt von 44,1 % (2h, Vakuum/120°C) und einem K-Wert nach Fikentscher (1% in Wasser) von 23,1.

Der pKₐ-Wert von Hilfssubstanz C-3 betrug 6,4.

### II. Herstellung von erfindungsgemäßen Tinten für das Ink-Jet-Verfahren

In einem Becherglas wurden Ingredienzien gemäß Tabelle 1 vermischt. Alle Mengenangaben in g, wenn nicht anders angegeben. Man erhielt die erfindungsgemäßen Tinten T1 bis T8.

**Tabelle 1: Zusammensetzung von erfindungsgemäßen Tinten T1 bis T4**

| | T1 (cyan) | T2 (magenta) | T3 (gelb) | T4 (schwarz) |
|---|---|---|---|---|
| Disperse Blue 359 | 4,5 | | | |
| Disperse Red 60 | | 4,2 | | 0,5 |
| Disperse Yellow 54 | | | 3,5 | 0,5 |
| Disperse Blue 72 | | | | 2,8 |
| Dispergiermittel 1 | 6 | 5,6 | 4,67 | 5,07 |
| C-1 | 0,35 | 0,3 | 0,25 | 0,4 |
| Diethylenglykol | 12,8 | 13,2 | 11,7 | 12,6 |
| Triethanolamin | 0,2 | 0,2 | 0,2 | 0,2 |
| Zuschlagstoff D1 | 4,5 | 4,2 | 3,5 | 3,8 |
| Zuschlagstoff D2 | 5,2 | 6,4 | 7,3 | 4,6 |
| Zuschlagstoff D3 | 0,3 | 0,28 | 0,23 | 0,25 |
| Zuschlagstoff D4 | 0,12 | 0,2 | 0,15 | 0,23 |
| Vollentsalztes Wasser | 66,03 | 65,42 | 68,5 | 69,05 |

Es bedeuten:
Dispergiermittel 1: Verbindung I b.1, pkₐ-Wert 2,2. 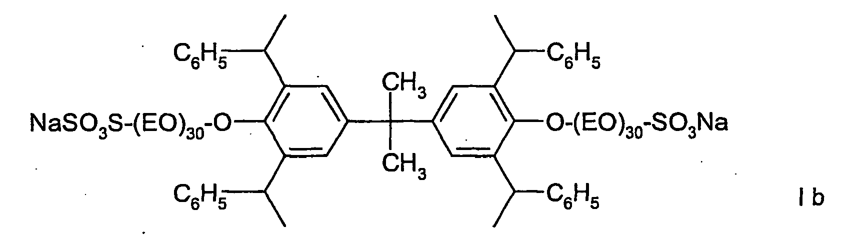
Zuschlagstoff D1: Polyethylenglykol mit M_{w} 1000 g/mol
Zuschlagstoff D2: Polyethylenglykol mit M_{w} 4000 g/mol
Zuschlagstoff D3: 20 Gew.-% Lösung von 1,2-Benziso-thiazolin-3-on in Propylenglykol (Biozid)
Zuschlagstoff D4: H(OCH₂CH₂)₇O-(CH₂)₃-Si(CH₃)[OSi(CH₃)₃]₂

**Tabelle 1 (Fortsetzung)**

| | T5 (cyan) | T6 (magenta) | T7 (gelb) | T8 (schwarz) |
|---|---|---|---|---|
| Disperse Blue 359 | 4,5 | | | |
| Disperse Red 60 | | 4,2 | | 0,5 |
| Disperse Yellow 54 | | | 3,5 | 0,5 |
| Disperse Blue 72 | | | | 2,8 |
| Dispergiermittel 2 | 6 | 5,6 | 4,67 | 5,07 |
| C-2 | 0,52 | 0,48 | 0,41 | 0,32 |
| Glycerin | 11,4 | 12,3 | 10,2 | 11,3 |
| Triethanolamin | 0,25 | 0,25 | 0,25 | 0,25 |
| Zuschlagstoff D1 | 4,5 | 4,2 | 3,5 | 3,8 |
| Zuschlagstoff D5 | 6,5 | 7,7 | 8,5 | 5,9 |
| Zuschlagstoff D3 | 0,3 | 0,28 | 0,23 | 0,25 |
| Zuschlagstoff D6 | 0,1 | 0,15 | 0,1 | 0,15 |
| Vollentsalztes Wasser | 65,93 | 64,84 | 68,64 | 69,16 |

- Dispergiermittel 2:: Naphthalinsulfonsäure/Formaldehyd-Kondensat mit M_{w} 20.000 g/mol, pkₐ-Wert 2,1.
- Zuschlagstoff D5:: Polyethylenglykol mit M_{w} 4000 g/mol
- Zuschlagstoff D6:: H(OC₃H₆)₃-(OCH₂CH₂)₁₀-O-(CH₂)₃-Si(CH₃)[OSi(CH₃)₃][OSi(CH₃)₂]₃-OSi(CH₃)₃

### III. Druckversuche mit erfindungsgemäßen Tinten

### III.1 Druckversuche mit den erfindungsgemäßen Tinten T1 bis T4

Die erfindungsgemäßen Tinten T1 bis T4 wurden mit einem Ink-Jet-Drucker Mimaki JV4 auf Substrate B1 bis B7 zu Linienmustem verdruckt, und zwar zu Streifen aus jeweils einer Tinte T1 bis T4 neben Streifen aus jeweils einer Tinte T1 bis T3 oder Mischungen aus zwei oder drei Tinten T1 bis T3, und das Ausbluten der jeweiligen Tinten an den Grenzen der Streifen in mm vermessen. Dabei wurden in Abhängigkeit der unten aufgeführten Substrate folgende Resultate erhalten.

### III.1.1 Verdrucken von erfindungsgemäßen Tinten auf Substrat B1

Als Substrat B1 diente Papier: Coldenhove Jetcol HTR 2000, pKₐ-Wert: 4,9

**Tabelle 2.1 Verdrucken von erfindungsgemäßen Tinten T1 bis T4 auf Substrat B1**

| | T1 (cyan) | T2 (magenta) | T3 (gelb) | T4 (schwarz) |
|---|---|---|---|---|
| T1/T2/T3 | 0,12 | 0,11 | 0,08 | 0,07 |
| T1/T2 | 0,06 | 0,08 | 0,09 | 0,07 |
| T1/T3 | 0,08 | 0,09 | 0,07 | 0,09 |
| T2/T3 | 0,06 | 0,07 | 0,06 | 0,05 |
| T1 | - | 0,04 | 0,06 | 0,05 |
| T2 | - | - | 0,07 | 0,03 |
| T3 | - | - | - | 0,04 |

### III.1.2 Verdrucken von erfindungsgemäßen Tinten auf Substrat B2

Als Substrat B2 diente Papier: Coldenhove Jetcol HTR 4000, pKₐ-Wert: 4,8

**Tabelle 2.2 Verdrucken von erfindungsgemäßen Tinten T1 bis T4 auf Substrat B2**

| | T1 (cyan) | T2 (magenta) | T3 (gelb) | T4 (schwarz) |
|---|---|---|---|---|
| T1/T2/T3 | 0,14 | 0,1 | 0,09 | 0,08 |
| T1/T2 | 0,05 | 0,1 | 0,08 | 0,06 |
| T1/T3 | 0,06 | 0,09 | 0,07 | 0,07 |
| T2/T3 | 0,08 | 0,09 | 0,08 | 0,04 |
| T1 | - | 0,05 | 0,07 | 0,05 |
| T2 | - | - | 0,08 | 0,03 |
| T3 | - | - | - | 0,05 |

### III.1.3 Verdrucken von erfindungsgemäßen Tinten auf Substrat B3

Als Substrat B3 diente Papier: Coldenhove Jetcol Highspeed, pKₐ-Wert: 5,0

**Tabelle 2.3 Verdrucken von erfindungsgemäßen Tinten T1 bis T4 auf Substrat B3**

| | T1 (cyan) | T2 (magenta) | T3 (gelb) | T4 (schwarz) |
|---|---|---|---|---|
| T1/T2/T3 | 0,12 | 0,09 | 0,05 | 0,08 |
| T1/T2 | 0,07 | 0,09 | 0,09 | 0,06 |
| T1/T3 | 0,07 | 0,1 | 0,08 | 0,09 |
| T2/T3 | 0,05 | 0,06 | 0,07 | 0,06 |
| T1 | - | 0,03 | 0,05 | 0,06 |
| T2 | - | - | 0,08 | 0,04 |
| T3 | - | - | - | 0,03 |

### III.1.4 Verdrucken von erfindungsgemäßen Tinten auf Substrat B4

Als Substrat B4 diente Papier: Cham Tenero Transjet 831, pKₐ-Wert: 5,5

**Tabelle 2.4 Verdrucken von erfindungsgemäßen Tinten T1 bis T4 auf Substrat B4**

| | T1 (cyan) | T2 (magenta) | T3 (gelb) | T4 (schwarz) |
|---|---|---|---|---|
| T1/T2/T3 | 0,14 | 0,12 | 0,07 | 0,07 |
| T1/T2 | 0,08 | 0,09 | 0,1 | 0,06 |
| T1/T3 | 0,08 | 0,09 | 0,06 | 0,08 |
| T2/T3 | 0,05 | 0,08 | 0,07 | 0,07 |
| T1 | - | 0,06 | 0,07 | 0,07 |
| T2 | - | - | 0,06 | 0,07 |
| T3 | - | - | - | 0,06 |

### III.1.5 Vergleichsversuch: Verdrucken von erfindungsgemäßen Tinten auf Substrat B5

Als Substrat B5 diente Papier: EPSON Photo Quality Paper, pKₐ-Wert: 7,7

**Tabelle 2.5 Verdrucken von erfindungsgemäßen Tinten T1 bis T4 auf Substrat B5**

| | T1 (cyan) | T2 (magenta) | T3 (gelb) | T4 (schwarz) |
|---|---|---|---|---|
| T1/T2/T3 | 1,7 | 1,9 | 1,6 | 2,1 |
| T1/T2 | 0,7 | 0,5 | 0,6 | 0,5 |
| T1/T3 | 0,9 | 1,0 | 0,8 | 0,95 |
| T2/T3 | 0,8 | 0,4 | 0,5 | 1,05 |
| T1 | - | 0,06 | 0,2 | 0,05 |
| T2 | - | - | 0,06 | 0,07 |

### III.2 Verdrucken der erfindungsgemäßen Tinten T5 bis T8

Die erfindungsgemäßen Tinten T5 bis T8 wurden mit einem Ink-Jet-Drucker Mimaki JV4 auf Substrate B1 bis B7 zu Linienmustern verdruckt, und zwar zu Streifen aus jeweils einer Tinte T5 bis T8 neben Streifen aus jeweils einer Tinte T5 bis T7 oder Mischungen aus zwei oder drei Tinten T5 bis T7, und das Ausbluten der jeweiligen Tinten an den Grenzen der Streifen in mm vermessen. Dabei wurden in Abhängigkeit der unten aufgeführten Substrate folgende Resultate erhalten.

**Tabelle 3.1 Verdrucken von erfindungsgemäßen Tinten T5 bis T8 auf Substrat B1**

| | T5 (cyan) | T6 (magenta) | T7 (gelb) | T8 (schwarz) |
|---|---|---|---|---|
| T5/T6/T7 | 0,15 | 0,12 | 0,09 | 0,09 |
| T5/T6 | 0,09 | 0,1 | 0,11 | 0,09 |
| T5/T7 | 0,11 | 0,09 | 0,1 | 0,12 |
| T6/T7 | 0,08 | 0,09 | 0,09 | 0,08 |
| T5 | - | 0,06 | 0,08 | 0,09 |
| T6 | - | - | 0,07 | 0,05 |
| T7 | - | - | - | 0,06 |

**Tabelle 3.2 Verdrucken von erfindungsgemäßen Tinten T5 bis T8 auf Substrat B2**

| | T5 (cyan) | T6 (magenta) | T7 (gelb) | T8 (schwarz |
|---|---|---|---|---|
| T5/T6/T7 | 0,16 | 0,13 | 0,12 | 0,1 |
| T5/T6 | 0,08 | 0,11 | 0,1 | 0,09 |
| T5/T7 | 0,06 | 0,12 | 0,09 | 0,08 |
| T6/T7 | 0,1 | 0,08 | 0,09 | 0,06 |
| T5 | - | 0,07 | 0,08 | 0,07 |
| T6 | - | - | 0,08 | 0,05 |
| T7 | - | - | - | 0,07 |

**Tabelle 3.3 Verdrucken von erfindungsgemäßen Tinten T5 bis T8 auf Substrat B3**

| | T5 (cyan) | T6 (magenta) | T7 (gelb) | T8 (schwarz) |
|---|---|---|---|---|
| T5/T6/T7 | 0,13 | 0,1 | 0,08 | 0,09 |
| T5/T6 | 0,08 | 0,09 | 0,08 | 0,09 |
| T5/T7 | 0,06 | 0,11 | 0,09 | 0,11 |
| T6/T7 | 0,07 | 0,08 | 0,08 | 0,09 |
| T5 | - | 0,07 | 0,06 | 0,05 |
| T6 | - | - | 0,07 | 0,07 |
| T7 | - | - | - | 0,06 |

**Tabelle 3.4 Verdrucken von erfindungsgemäßen Tinten T5 bis T8 auf Substrat B4**

| | T5 (cyan) | T6 (magenta) | T7 (gelb) | T8 (schwarz) |
|---|---|---|---|---|
| T5/T6/T7 | 0,15 | 0,13 | 0,09 | 0,1 |
| T5/T6 | 0,08 | 0,08 | 0,11 | 0,08 |
| T5/T7 | 0,07 | 0,1 | 0,07 | 0,09 |
| T6/T7 | 0,06 | 0,09 | 0,08 | 0,07 |
| T5 | - | 0,08 | 0,08 | 0,08 |
| T6 | - | - | 0,07 | 0,08 |
| T7 | - | - | - | 0,07 |

**Tabelle 3.5 Verdrucken von erfindungsgemäßen Tinten T5 bis T8 auf Substrat B5 (Vergleichsversuch)**

| | T5 (cyan) | T6 (magenta) | T7 (gelb) | T8 (schwarz) |
|---|---|---|---|---|
| T5/T6/T7 | 1,6 | 1,8 | 1,4 | 1,95 |
| T5/T6 | 0,55 | 0,8 | 0,7 | 0,5 |
| T5/T7 | 1,0 | 1,0 | 0,7 | 0,9 |
| T6/T7 | 0,6 | 0,55 | 0,6 | 0,95 |
| T5 | - | 0,1 | 0,05 | 0,2 |
| T6 | 0,08 | - | 0,1 | 0,1 |

Die mit den erfindungsgemäßen Tinten bedruckten Substraten wiesen außerdem sehr gute Reibechtheiten auf.

## Patentansprüche

1. Verfahren zum Aufbringen von gelösten oder dispergierten Substanzen (A) aus einer Formulierung in polarem Medium auf Substraten (B) unter Verwendung von mindestens einer Hilfssubstanz (C), indem man
eine Formulierung in polarem Medium, die gelöste oder dispergierte Substanz (A) und mindestens eine Hilfssubstanz (C) enthält, auf Substrat (B) aufbringt,
wobei der pKₐ-Wert von Hilfssubstanz (C) höher ist als vom Substrat (B) und von gelöster oder dispergierter Substanz (A),
wobei man gelöste oder dispergierte Substanz (A) wählt aus wasserlöslichen Farbstoffen, selbstdispergierenden Farbmitteln, Kombinationen aus Dispersionsfarbstoff mit Dispergiermittel und Kombinationen aus Pigment mit Dispergiermittel und wobei Hilfssubstanz (C) gewählt wird aus dreidimensionalen amphoteren Kern-Schale-Polymeren, bei denen es sich um partiell vernetztes chemisch modifiziertes Polymer mit kationischem Kern, der erhältlich ist durch (Co)polymerisation von einem oder mehreren Stickstoffhaltigen (Co)monomeren, und vor dem Aufbringen auf Substrat (B) ungeladener oder negativ geladener Hülle handelt.

2. Verfahren nach Anspruch 1, **dadurch gekennzeichnet, dass** man Substrat (B) weder unmittelbar vor noch unmittelbar nach dem Aufbringen von Formulierung in polarem Medium, die gelöste oder dispergierte Substanz (A) und mindestens eine Hilfssubstanz (C) enthält, mit einer Lösung von anionischem Polymer kontaktiert.

3. Verfahren nach Anspruch 1 oder 2, **dadurch gekennzeichnet, dass** es sich bei Substraten (B) um flexible Substrate handelt.

4. Verfahren nach einem der Ansprüche 1 bis 3, **dadurch gekennzeichnet, dass** gelöste oder dispergierte Substanz (A) mindestens eine anionische Substanz umfasst.

5. Verfahren nach einem der Ansprüche 1 bis 4, **dadurch gekennzeichnet, dass** gelöste oder dispergierte Substanz (A) eine Substanz mit mindestens einer SO₃⁻- oder OSO₃⁻ -Gruppe pro Molekül umfasst.

6. Verfahren nach einem der Ansprüche 1 bis 5, **dadurch gekennzeichnet, dass** man es als Ink-Jet-Verfahren ausführt.

7. Verfahren nach einem der Ansprüche 1 bis 6, **dadurch gekennzeichnet, dass** man als Substrat (B) Papier wählt.

8. Verfahren nach einem der Ansprüche 1 bis 7, **dadurch gekennzeichnet, dass** Hilfssubstanz (C) erhältlich ist durch Umsetzung von
(C1) mindestens einem Stickstoff-haltigen Polymer, gewählt aus Polyalkylenpolyaminen, Polyamidoaminen, mit Ethylenimin gepfropften Polyamidoaminen, Polyetheraminen, mit
(C2) mindestens einem Carboxyalkylierungsreagenz, gewählt aus α,β-ungesättigten Carboxylverbindungen, deren Carboxylgruppen frei oder verkappt sein können, α-Halogencarboxylverbindungen, deren Carboxylgruppen frei oder verkappt sein können, Glycidylcarboxylverbindungen, deren Carboxylgruppen frei oder verkappt sein können, Cyanhydrinen, und Gemischen von mindestens einem Aldehyd und mindestens einem Alkalimetallcyanid,
(C3) und gegebenenfalls mindestens einem mindestens bifunktionellen Vernetzer, dessen funktionelle Gruppen gewählt werden aus Halogenhydrin-, Glycidyl-, Aziridin- oder Isocyanat-Einheiten oder Halogenatomen.

9. Formulierung, enthaltend mindestens eine gelöste oder dispergierte Substanz (A) und mindestens eine Hilfssubstanz (C) in polarem Medium, wobei der pKₐ-Wert von Hilfssubstanz (C) höher ist als von gelöster oder dispergierter Substanz (A), wobei man gelöste oder dispergierte Substanz (A) wählt aus wasserlöslichen Farbstoffen, selbstdispergierenden Farbmitteln, Kombinationen aus Dispersionsfarbstoff mit Dispergiermittel und Kombinationen aus Pigment mit Dispergiermittel und wobei Hilfssubstanz (C) gewählt wird aus dreidimensionalen amphoteren Kern-Schale-Polymeren, bei denen es sich um partiell vernetztes chemisch modifiziertes Polymer mit kationischem Kern, erhältlich durch (Co)polymerisation von einem oder mehreren Stickstoffhaltigen (Co)monomeren, und vor dem Aufbringen auf Substrat (B) ungeladener oder negativ geladener Hülle handelt.

10. Formulierung nach Anspruch 9, **dadurch gekennzeichnet, dass** es sich bei gelöster oder dispergierter Substanz (A) um einen Dispersionsfarbstoff handelt.

11. Formulierung nach Anspruch 9 oder 10, **dadurch gekennzeichnet, dass** es sich bei gelöster oder dispergierter Substanz (A) um eine Substanz mit SO₃⁻- oder OSO₃⁻-Gruppen handelt.

12. Formulierung nach einem der Ansprüche 9 bis 11, **dadurch gekennzeichnet, dass** Hilfssubstanz (C) erhältlich ist durch Umsetzung von
(C1) mindestens einem Stickstoff-haltigen Polymer, gewählt aus Polyalkylenpolyaminen, Polyamidoaminen, mit Ethylenimin gepfropften Polyamidoaminen, Polyetheraminen, mit
(C2) mindestens einem Carboxyalkylierungsreagenz, gewählt aus α,β-ungesättigten Carboxylverbindungen, deren Carboxylgruppen frei oder verkappt sein können, α-Halogencarboxylverbindungen, deren Carboxylgruppen frei oder verkappt sein können, Glycidylcarboxylverbindungen, deren Carboxylgruppen frei oder verkappt sein können, Cyanhydrinen, und Gemischen von mindestens einem Aldehyd und mindestens einem Alkalimetallcyanid, und
(C3) gegebenenfalls mindestens einem mindestens bifunktionellen Vernetzer, dessen funktionelle Gruppen gewählt werden aus Halogenhydrin-, Glycidyl-, Aziridin- oder Isocyanat-Einheiten oder Halogenatomen.

13. Tinten für das Ink-Jet-Verfahren, enthaltend mindestens eine wässrige Formulierung nach einem der Ansprüche 9 bis 12.

14. Tintensatz für das Ink-Jet-Verfahren, umfassend mindestens zwei Tinten nach Anspruch 13.

15. Verfahren zur Herstellung von wässrigen Formulierungen nach einem der Ansprüche 9 bis 12, **dadurch gekennzeichnet, dass** man mindestens eine Substanz (A) in wässrigem Medium löst bzw. dispergiert und mit mindestens einer Hilfssubstanz (C) vermischt.

16. Verfahren zum Bedrucken von Substraten (B) nach mindestens einem der Ansprüche 1 bis 8 unter Verwendung von mindestens einer wässrigen Formulierung nach einem der Ansprüche 9 bis 12.

17. Substrate, behandelt nach einem Verfahren nach einem der Ansprüche 1 bis 8.

18. Verwendung von bedruckten Substraten nach Anspruch 17 als Übertragungsmedium im Transferdruckverfahren.

19. Verfahren zum Kolorieren von Polyester oder polyesterhaltige Materialien nach dem Transferdruckverfahren unter Verwendung von bedruckten Substraten nach Anspruch 17 als Übertragungsmedium.

## Claims

1. A process for applying dissolved or dispersed substances (A) from a formulation in a polar medium to substrates (B) using at least one auxiliary substance (C) by a formulation in a polar medium comprising dissolved or dispersed substance (A) and at least one auxiliary substance (C) being applied to substrate (B), wherein the pKₐ value of auxiliary substance (C) is higher than that of substrate (B) and of dissolved or dispersed substance (A),
wherein dissolved or dispersed substance (A) is selected from water-soluble dyes, self-dispersing colorants, combinations of disperse dye with dispersant and combinations of pigment with dispersant
and wherein auxiliary substance (C) is selected from three-dimensional amphoteric core-shell polymers which comprise partially crosslinked chemically modified polymer having a cationic core which is obtainable by (co)polymerization of one or more nitrogenous (co)monomers, and a shell which is uncharged or negatively charged before the applying to substrate (B).

2. The process according to claim 1 wherein substrate (B) is contacted with a solution of anionic polymer neither immediately before nor immediately after the applying of formulation in a polar medium which comprises dissolved or dispersed substance (A) and at least one auxiliary substance (C).

3. The process according to claim 1 or 2 wherein substrates (B) are flexible substrates.

4. The process according to any one of claims 1 to 3 wherein dissolved or dispersed substance (A) comprises at least one anionic substance.

5. The process according to any one of claims 1 to 4 wherein dissolved or dispersed substance (A) comprises a substance having at least one SO₃⁻ or OSO₃⁻ group per molecule.

6. The process according to any one of claims 1 to 5 which is embodied as an ink jet process.

7. The process according to any one of claims 1 to 6 wherein paper is selected as substrate (B).

8. The process according to any one of claims 1 to 7 wherein auxiliary substance (C) is obtainable by reaction of
(C1) at least one nitrogenous polymer selected from polyalkylenepolyamines, polyamidoamines, ethyleneimine-grafted polyamidoamines, polyetheramines, with
(C2) at least one carboxyalkylating reagent selected from α,β-unsaturated carboxyl compounds whose carboxyl groups may be free or capped, α-halocarboxyl compounds whose carboxyl groups may be free or capped, glycidylcarboxyl compounds whose carboxyl groups may be free or capped, cyanohydrins and mixtures of at least one aldehyde and at least one alkali metal cyanide,
(C3) and if appropriate at least one at least bifunctional crosslinker whose functional groups are selected from halohydrin, glycidyl, aziridine or isocyanate units or halogen atoms.

9. A formulation comprising at least one dissolved or dispersed substance (A) and at least one auxiliary substance (C) in a polar medium wherein the pKₐ value of auxiliary substance (C) is higher than that of dissolved or dispersed substance (A), wherein dissolved or dispersed substance (A) is selected from water-soluble dyes, self-dispersing colorants, combinations of disperse dye with dispersant and combinations of pigment with dispersant and wherein auxiliary substance (C) is selected from three-dimensional amphoteric core-shell polymers which comprise partially crosslinked chemically modified polymer having cationic core obtainable by (co)polymerization of one or more nitrogenous (co)monomers, and a shell which is uncharged or negatively charged before the applying to substrate (B).

10. The formulation according to claim 9 wherein dissolved or dispersed substance (A) comprises a disperse dye.

11. The formulation according to claim 9 or 10 wherein dissolved or dispersed substance (A) comprises a substance having SO₃⁻ or OSO₃⁻ groups.

12. The formulation according to any one of claims 9 to 11 wherein auxiliary substance (C) is obtainable by reaction of
(C1) at least one nitrogenous polymer selected from polyalkylenepolyamines, polyamidoamines, ethyleneimine-grafted polyamidoamines, polyetheramines, with
(C2) at least one carboxyalkylating reagent selected from α,β-unsaturated carboxyl compounds whose carboxyl groups may be free or capped, α-halocarboxyl compounds whose carboxyl groups may be free or capped, glycidylcarboxyl compounds whose carboxyl groups may be free or capped, cyanohydrins and mixtures of at least one aldehyde and at least one alkali metal cyanide, and
(C3) if appropriate at least one at least bifunctional crosslinker whose functional groups are selected from halohydrin, glycidyl, aziridine or isocyanate units or halogen atoms.

13. An ink jet process ink comprising at least one aqueous formulation according to any one of claims 9 to 12.

14. An ink jet process ink set comprising at least two inks according to claim 13.

15. A process for producing an aqueous formulation according to any one of claims 9 to 12, which comprises at least one substance (A) being dissolved or dispersed in an aqueous medium and mixed with at least one auxiliary substance (C).

16. The process for printing substrates (B) according to at least one of claims 1 to 8 by using at least one aqueous formulation according to any one of claims 9 to 12.

17. A substrate treated by a process according to any one of claims 1 to 8.

18. The use of a printed substrate according to claim 17 as a transfer medium in the transfer printing process.

19. A process for coloring polyester or polyester-containing material by the transfer printing process by using a printed substrate according to claim 17 as a transfer medium.

## Revendications

1. Procédé pour l'application de substances (A) dissoutes ou dispersées à partir d'une composition dans un milieu polaire sur des supports (B) avec utilisation d'au moins une substance auxiliaire (C), par
application d'une composition dans un milieu polaire, qui contient la substance (A) dissoute ou dispersée et au moins une substance auxiliaire (C), sur un support (B), le pKₐ de la substance auxiliaire (C) étant supérieur à celui du support (B) et de la substance (A) dissoute ou dispersée, la substance (A) dissoute ou dispersée étant choisie parmi des colorants hydrosolubles, des agents colorants se dispersant d'eux-mêmes, des associations de colorant en dispersion avec des dispersants et des associations de pigment avec des dispersants et la substance auxiliaire (C) étant choisie parmi des polymères tridimensionnels amphotères à noyau-enveloppe qui consistent en un polymère modifié chimiquement, partiellement réticulé, à noyau cationique, pouvant être obtenu par (co)polymérisation d'un ou plusieurs (co)monomères azotés et en une enveloppe non chargée ou chargée négativement avant l'application sur le support (B).

2. Procédé selon la revendication 1, **caractérisé en ce qu'**on ne met en contact le support (B) ni immédiatement avant, ni immédiatement après l'application de la composition dans un milieu polaire qui contient la substance (A) dissoute ou dispersée et au moins une substance auxiliaire (C), avec une solution de polymère anionique.

3. Procédé selon la revendication 1 ou 2, **caractérisé en ce que** les supports (B) consistent en des supports flexibles.

4. Procédé selon l'une quelconque des revendications 1 à 3, **caractérisé en ce que** la substance (A) dissoute ou dispersée comprend au moins une substance anionique.

5. Procédé selon l'une quelconque des revendications 1 à 4, **caractérisé en ce que** la substance (A) dissoute ou dispersée comprend une substance comportant au moins un groupe SO₃⁻ ou OSO₃⁻.

6. Procédé selon l'une quelconque des revendications 1 à 5, **caractérisé en ce qu'**on l'effectue en tant que procédé d'impression par jet d'encre.

7. Procédé selon l'une quelconque des revendications 1 à 6, **caractérisé en ce qu'**on choisit du papier en tant que support (B).

8. Procédé selon l'une quelconque des revendications 1 à 7, **caractérisé en ce que** la substance auxiliaire (C) peut être obtenue par mise en réaction de
(C1) au moins un polymère azoté, choisi parmi des polyalkylène-polyamines, des polyamido-amines, des polyamido-amines greffées avec de l'éthylène-imine, des polyétheramines, avec
(C2) au moins un réactif de carboxyalkylation, choisi parmi des composés carboxyliques α,β-insaturés, dont les groupes carboxy peuvent être libres ou coiffés, des composés α-halogénocarboxyliques dont les groupes carboxy peuvent être libres ou coiffés, des composés glycidylcarboxyliques dont les groupes carboxy peuvent être libres ou coiffés, des cyanhydrines et des mélanges d'au moins un aldéhyde et d'au moins un cyanure de métal alcalin,
(C3) et éventuellement au moins un agent de réticulation au moins bifonctionnel, dont les groupes fonctionnels sont choisis parmi des unités halogénohydrine, glycidyle, aziridine ou isocyanate ou des atomes d'halogène.

9. Composition, contenant au moins une substance (A) dissoute ou dispersée et au moins une substance auxiliaire (C) dans un milieu polaire, le pKₐ de la substance auxiliaire (C) étant supérieur à celui de la substance (A) dissoute ou dispersée, la substance (A) dissoute ou dispersée étant choisie parmi des colorants hydrosolubles, des agents colorants se dispersant d'eux-mêmes, des associations de colorant en dispersion avec des dispersants et des associations de pigment avec des dispersants et la substance auxiliaire (C) étant choisie parmi des polymères tridimensionnels amphotères à noyau-enveloppe qui consistent en un polymère modifié chimiquement, partiellement réticulé, à noyau cationique, pouvant être obtenu par (co)polymérisation d'un ou plusieurs (co)monomères azotés et en une enveloppe non chargée ou chargée négativement avant l'application sur le support (B).

10. Composition selon la revendication 9, **caractérisée en ce que** la substance (A) dissoute ou dispersée consiste en un colorant en dispersion.

11. Composition selon la revendication 9 ou 10, **caractérisée en ce que** la substance (A) dissoute ou dispersée consiste en une substance comportant des groupes SO₃⁻ ou OSO₃⁻.

12. Composition selon l'une quelconque des revendications 9 à 11, **caractérisée en ce que** la substance auxiliaire (C) peut être obtenue par mise en réaction de
(C1) au moins un polymère azoté, choisi parmi des polyalkylène-polyamines, des polyamido-amines, des polyamido-amines greffées avec de l'éthylène-imine, des polyétheramines, avec
(C2) au moins un réactif de carboxyalkylation, choisi parmi des composés carboxyliques α,β-insaturés, dont les groupes carboxy peuvent être libres ou coiffés, des composés α-halogénocarboxyliques dont les groupes carboxy peuvent être libres ou coiffés, des composés glycidylcarboxyliques dont les groupes carboxy peuvent être libres ou coiffés, des cyanhydrines et des mélanges d'au moins un aldéhyde et d'au moins un cyanure de métal alcalin, et
(C3) éventuellement au moins un agent de réticulation au moins bifonctionnel, dont les groupes fonctionnels sont choisis parmi des unités halogénohydrine, glycidyle, aziridine ou isocyanate ou des atomes d'halogène.

13. Encres pour le procédé d'impression par jet d'encre, contenant au moins une composition aqueuse selon l'une quelconque des revendications 9 à 12.

14. Jeu d'encres pour le procédé d'impression par jet d'encre, comprenant au moins deux encres selon la revendication 13.

15. Procédé pour la préparation de compositions aqueuses selon l'une quelconque des revendications 9 à 12, **caractérisé en ce qu'**on dissout ou disperse au moins une substance (A) dans un milieu aqueux et on la mélange avec au moins une substance auxiliaire (C).

16. Procédé pour l'impression de supports (B) selon au moins l'une des revendications 1 à 8, avec utilisation d'au moins une composition aqueuse selon au moins l'une des revendications 9 à 12.

17. Supports, traités conformément à un procédé selon l'une quelconque des revendications 1 à 8.

18. Utilisation de supports imprimés selon la revendication 17, en tant que milieu de transfert dans le procédé d'impression par transfert.

19. Procédé pour la coloration de polyester ou de matériaux contenant du polyester, selon le procédé d'impression par transfert, avec utilisation de supports imprimés selon la revendication 17, en tant que milieu de transfert.
